# EUROPEAN PATENT SPECIFICATION

(11) **EP 2 275 972 B1**
(45) Date of publication and mention of the grant of the patent: **28.11.2018**
(21) Application number: 09171828.8
(22) Date of filing: 30.09.2009
(51) Int. Cl.: G06K 9/00, G06Q 10/10

(54) **System and method for identifying text-based spam in images**
System und Verfahren zur Identifizierung von textbasiertem Spam in Bildern
Système et procédé pour identifier du spam à base de texte dans des images

(30) Priority: 06.07.2009 US 498196
(43) Date of publication of application: 19.01.2011
(73) Proprietor: AO Kaspersky Lab, Moscow 123060 (RU)
(72) Inventor: Smirnov, Evgeny P., 123060, Moscow (RU)
(74) Representative: Fennell, Gareth Charles

(56) References cited:
- EP-A2- 0 543 593
- EP-A2- 0 621 554
- EP-A2- 1 357 508
- US-A1- 2005 216 564
- SPITZ A L ED: "TEXT CHARACTERIZATION BY CONNECTED COMPONENT TRANSFORMATIONS" DOCUMENT RECOGNITION. SAN JOSE, FEB. 9 - 10, 1994; [DOCUMENT RECOGNITION], BELLINGHAM, SPIE, US, vol. 2181, 9 February 1994 (1994-02-09), pages 97-105, XP000642508 ISBN: 978-0-8194-1476-2

## Description

The present invention relates to the field of electronic communication. Embodiments concern identification of text in graphical images, particularly images that are suspected of being SPAM, and particularly SPAM-images with text that has been deliberately altered to defeat OCR and binary signature methods of SPAM detection. Other embodiments concern identification of SPAM in an image.

SPAM emails have become a veritable scourge of modern email systems. It is estimated that as much as 60-80% of Internet email traffic today is of a SPAM nature. SPAM, in addition to being annoying and wasteful of the time of the recipient, places a considerable burden on large email service providers and on corporate networks. For a regular user, the cost of SPAM that gets through is a few clicks that it takes to delete the offending message. For large-scale email providers, such as Google, Yahoo, Microsoft, as well as for large corporations that have their own server-based solutions for SPAM filtering, handling SPAM is a problem that needs to be solved on an industrial scale. For example, such large mail service providers need to filter millions of SPAM messages every hour.

A phenomenon observed recently is the increasing professionalization of SPAM generators. Many of the techniques used by SPAM generators closely mirror and borrow from the techniques used by many professional virus writers. At any given moment millions of computers connected to the Internet are zombified. In other words, these computers spew out vast numbers of SPAM emails, even though the owners of these computers are unaware of this fact.

Although in the early days of the SPAM epidemic it was possible to filter SPAM by looking for keywords, such as "Viagra," "Hoodia," "free offer" and so on, modem SPAM has evolved far beyond such simple and easily filterable examples. Today it is common to find SPAM embedded in images, which are, themselves, embedded within the body of the email or sometimes as an attachment to an otherwise innocuous email. The problem of filtering image-based SPAM presents a difficulty to the anti-SPAM software vendor, because filtering images generally requires a dramatically greater investment in hardware resources, compared to filtering simple text-based SPAM. Also, for large email service providers and corporate email servers, such SPAM filtering needs to deal with the SPAM more or less on-the-fly or within at most a few seconds, and it would be unacceptable if the SPAM filters delayed receipt of the email by significant time.

Image-based SPAM has thus far defied an effective solution primarily for two reasons. One is that SPAM generators have quickly learned to defeat signature-based methods of SPAM detection. If a known SPAM message (for example, a known SPAM GIF or a JPEG) is bitwise-compared to a suspect image, then by randomly changing a handful of bits in the images, the image remains virtually unchanged to the human observer but has a different signature (if only by a handful of bits).

For example, where three bytes are used to represent each color pixel, changing only one bit of one pixel of a large image would be undetectable to the naked eye, but nonetheless such an image would be treated as having a different signature by the signature method of SPAM detection. Any changes in the background of the image, the color of the background or the letters, distributing random "blotches" or "spots" in the background of the image and so on, all combine to defeat the signature-based method for detecting SPAM in images.

Another way to detect image-based SPAM is through optical character recognition (OCR). The OCR-based methods have two primary drawbacks: first, they are very resource intensive and are difficult for use in email systems that process large numbers of such emails per unit length of time. The second problem is that the accuracy of OCR systems is significantly less than 100%, raising the prospect of a false positive detection of a message which in fact is actually not SPAM.

In the industry, a false positive is generally regarded as a greater evil than letting through some number of SPAM messages, since very often an email falsely identified as SPAM by the SPAM filter will never be seen by its recipient, or, at best, it would be seen much later by the recipient. Additionally, just as spammers have learned to defeat the signature method of SPAM detection, some techniques that attempt to defeat OCR-based SPAM detection techniques have become available. They include writing text not in a straight line, but using wavy or curved lines, addition of noise to the image, spacing the letters in the words such so the words could not be recognized by OCR software, writing some letters at an angle, etc.

An example of a multi-stage method for analysis of raster images is described in Russian Patent No. 2234734. In this patent the first stage is a preliminary text identification using a less exact method, and then using more exact object identification for those objects that are left unidentified in the image. In the first stage the image is segmented into regions, tables, text fragments, text lines, words and symbols, and in the second stage the segmentation is further defined, using additional available information.

A similar principle is described in Russian Patent No. 2251151, where different objects in the image are divided into levels, based on the degree of complexity, such as a symbol, word, text line, paragraph, table and region. Each object is then associated with a
particular level and the connections between objects of different levels and of the same level are then identified. Then a hypothesis is formulated regarding the properties of the various objects, which is later corrected, based on various image attributes.

Both of these methods essentially lack an identification of text elements in the image, which makes the processing of such images in real time a relatively difficult task.

U.S. Patent Publication No. 2004/0221062 describes a method where in order to identify contents of the image, a preliminary visualization of the image is done in a first format, and afterwards the message is transformed into a purely symbolic format, so that to filter out decorative components of an image, prior to text analysis. U.S. Patent No. 7,171,046 also describes certain aspects of text identification in images.

U.S. Patent Publication No. 2005/0281455 describes a method of processing images and text in the images using a neural network. U.S. Patent No. 6,470,094 describes a general localization methodology for text in images, where, as a symbol, several adjacent pixels are used, which, in turn, are combined into words.

U.S. Patent No. 6,608,930 also describes identification of text in video images. In this patent, a first color is separated out, to enhance the contrast, which is further enhanced using a 3 x 3 map. Random noise is then removed using median filtration. The edge of the image is identified using an adaptive threshold, and then edges are removed from the image, so that portions of the image are deleted where there is no text, or where text cannot be reliably identified. Pixels that are close to each other are then combined into a single symbol, and then adjacent symbols are combined into words and then text lines. However, the method described in this patent is relatively calculation-intensive, and has not found substantial popularity.

U.S. Publication No. 2005/216564 describes a method and apparatus for analysis of electronic communications (e.g., e-mail and text messages) containing imagery or links to imagery (e.g., e-mail attachments or pointers to web pages). In one embodiment, specialized background separation and distortion rectification followed by optical character recognition (OCR) processing are applied to an electronic communication in order to analyze imagery contained in the communication, e.g., for the purposes of filtering or categorizing the communication. For example, the inventive method may be applied to detect the receipt of spam communications. As used herein, the term "spam" refers to any unsolicited electronic communications, including advertisements and communications designed for "phishing" (e.g., designed to elicit personal information by posing as a legitimate institution such as a bank or internet service provider), among others. In further embodiments, the inventive method may be applied to filter outgoing electronic communications, e.g., in order to ensure that proprietary information (such as images or screen shots of software source codes, product designs, etc.) is not disseminated to unauthorized parties or recipients.

EP 0543593 A2 discloses a method for determining the boundaries of a symbol or word string within an image, including the steps of determining page orientation, isolating symbol strings from adjacent symbol strings, and establishing a set of boundaries or references with respect to which measurements about, or further processing of, the symbol string may be made.

The invention represents a significant advancement in the field of electronic communication classification and filtering. In one embodiment, the inventive method and apparatus are enabled to analyze electronic communications in which spam-indicative text or other proprietary or unauthorized textual information is contained in imagery such as still images, video images, animations, applets, scripts and the like. Thus, even though electronic communications may contain cleverly disguised or hidden text messages, the likelihood that the communications will be identified as legitimate communications is substantially reduced. E-mail and text messaging users are therefore less likely to have to sift through unwanted and unsolicited communications in order to identify important or expected messages, or to send proprietary information to unauthorized parties.

Accordingly, there is a need in the art for an effective method of identifying text in images and an effective message of SPAM detection in emails that include embedded or attached images.

Embodiments relate to a method and system for detection of text and SPAM in images that substantially obviates one or more of the disadvantages of the related art.

Aspects of the invention are set out in the independent claims, and optional features of the invention are set out in the dependent claims.

In a first disclosed example, there is provided a system, method and computer program product for identifying spam in an image using two-color representation of an image, including identifying a plurality of contours in the image, the contours corresponding to probable symbols (letters, numbers, punctuation signs, etc.); ignoring contours that are too small or too large given the specified limits; identifying text lines in the image, based on the remaining contours; parsing the text lines into words; ignoring words that are too short or
too long, from the identified text lines; ignoring text lines that are too short; verifying that the image contains text by comparing a number of pixels of a symbol color within remaining contours to a total number of pixels of the symbol color in the image; and if the image contains a text, rendering a spam/no spam verdict based on a signature of the remaining text.

One of the two colors can be identified as a background color, and the other color as the symbol color. A spectral distribution of the two-color image can be generated, and a threshold set between the two colors at a level X2 + ¾ (X1 - X2), X1 being a center of mass of the spectral distribution, and X2 being a first color used in the spectral distribution. Identification of each contour includes identifying a first pixel of the symbol color, defining the contour as the first pixel, and then repeatedly expanding the contour in those directions where adjacent pixels are also of the symbol color.

As an alternative, the contour can be filled with a background color, or those pixels that have been processed can be excluded from further processing. For each contour, identifying contours that are within 2Xim of the contour as belonging to a suspected word, wherein Xim is a most frequent distance between all the adjacent contour pairs in all text lines.

In another disclosed example, a grey scale representation of a raster image can be used. Use of a grey scale raster image can be advantageous in terms of more precise representation of an original image for SPAM identification. When an original multicolor image is converted into its black and white representation, it is first converted into a grey image. Using a level of sharpness of a symbol contour can provide for more precise detection of SPAM with a fewer false positives.

In yet another disclosed example, the similar signatures of various image modifications are also taken in consideration. The images from the same SPAM broadcast can have slightly different versions and slightly different signatures. These signatures are considered using an approximately matching technique, employing calculation of the Levenshtein distance.

In a second disclosed example, there is provided a method for identifying spam in an image, utilizing a computer system, the method comprising: (a) identifying a plurality of contours in the image, the contours corresponding to probable symbols; (b) ignoring contours that are too small or too large; (c) identifying text lines in the image, based on the remaining contours; (d) parsing the text lines into words; (e) ignoring words that are too short or too long from the identified text lines; (f) ignoring text lines that are too short; (g) verifying that the image contains text by comparing a number of pixels of a symbol color within remaining contours to a total number of pixels of the symbol color in the image; and (h) if the image contains text, rendering a spam/no spam verdict based on a contour representation of the text that remains after step (f).

In a third disclosed example there is provided a method for identifying, utilizing a computer system, text in an image, the method comprising: (a) identifying a plurality of contours in the image, the contours corresponding to probable symbols, each contour forming a closed boundary around each probable symbol; for each contour, identifying adjacent contours that are within a distance of the contour, to the left and right, as belonging to the same text line, wherein the distance is based on a predefined criterion that takes into account adjacent contour pairs in a plurality of text lines; (b) identifying text lines in the image, based on the adjacent contours, wherein adjacent contours belong to the same text line; (c) parsing the text lines into words; and (d) identifying presence of text in the image based on the words.

In a fourth disclosed example there is provided a method for identifying spam in an image, utilizing a computer system, the method comprising; (a) converting a vector image into a grey scale raster image; (b) identifying a plurality of contours in the image using a level of sharpness of contours, the contours corresponding to probable symbols; (c) calculating angles for each of the contours moving in clockwise direction around the contour; (d) defining line segments and arcs based on the angles; (e) generating a set of measurements based on parameters of the arcs and the line segments; (f) forming a signatures of the image using the measurements; and (g) comparing the signature against a spam template and rendering a spam/no spam verdict based on comparison result.

In a further disclosed example there is provided a system for identifying spam in an image, the system comprising: a processor; a storage arrangement coupled to the processor; computer code stored in the storage arrangement and accessible to the processor, the computer code for implementing the steps of any preceding aspect.

In a yet further disclosed example there is provided a computer useable recording medium having computer executable program logic stored thereon for executing on a processor, the program logic comprising computer program code for implementing the steps of any of the first -fourth aspects.

Additional features and advantages of the invention will be set forth in the description that follows, and in part will be apparent from the description or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

The accompanying drawings illustrate embodiments of the invention and, together with the description, serve to explain the principles of the invention.

In the drawings:
FIG. 1 illustrates a basic algorithm of identifying text in images, according to one embodiment of the invention;
FIG. 2 illustrates an exemplary image of SPAM, such as commonly found imbedded in SPAM emails;
FIG. 3 illustrates the image of FIG. 2, converted to a black/white form;
FIG. 4 illustrates the contours drawn around probable symbols in the image of FIG. 3;
FIG. 5 illustrates the process of generating a contour around a probable symbol;
FIG. 6 illustrates the contours shown in FIG. 4, with the contours that are too small or too large (and other noise) to be removed;
FIG. 7 illustrates an exemplary computer system on which the invention may be implemented;
FIG. 8 illustrates how the contours remaining after FIG. 6 are parsed into words;
FIG. 9 illustrates how the text lines are parsed into words;
FIG. 10 illustrates how a SPAM/not SPAM verdict is reached, following the algorithm of FIG. 1;
FIG. 11 illustrates the algorithm used for converting a color image into a black and white image;
FIG. 12 illustrates an example of a histogram representation for conversion of a multi-color image into a two-color image;
FIG. 13 illustrates a selection of one of the two colors as the background color;
FIG. 14 illustrates the algorithm for identifying probable text lines;
FIGs. 15-17 illustrate how contours are threaded to the left and right to identify a probable text line;
FIG. 18 illustrates the algorithm for parsing text lines into words;
FIGs. 19 and 20 illustrate additional details of left and right threading of FIG. 14;
FIGs. 21-55 graphically illustrate the process described earlier, with additional detail shown, and with a commentary added to the figures to illustrate each step;
FIG. 56 is an additional illustration of left-threading and right-threading;
FIG. 57 a basic algorithm of identifying text and symbols in a raster images using a grey scale representation, according to one embodiment of the invention;
FIG. 58 illustrates a block diagram of a method for identifying SPAM using approximate signature matching, in accordance to the exemplary embodiment;
FIG. 59 illustrates a block diagram of a method for generation of a grey image signatures using contour configurations, in accordance to the exemplary embodiment;
FIG. 60 illustrates a block diagram of a method for identifying the spam by using known SPAM words, in accordance to the exemplary embodiment.
FIG. 61 illustrates a method for identifying an object inside a contour.

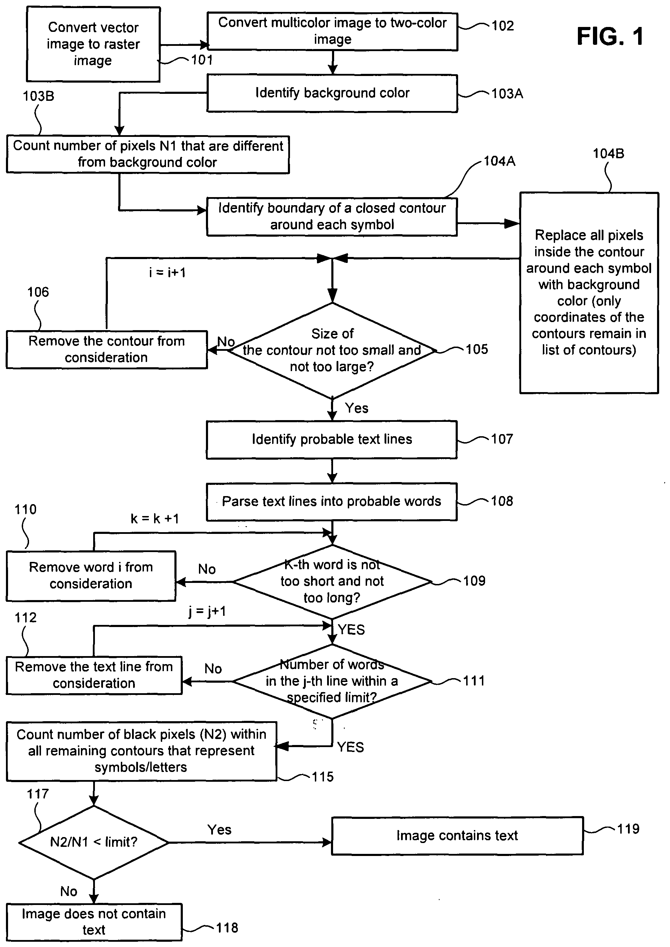

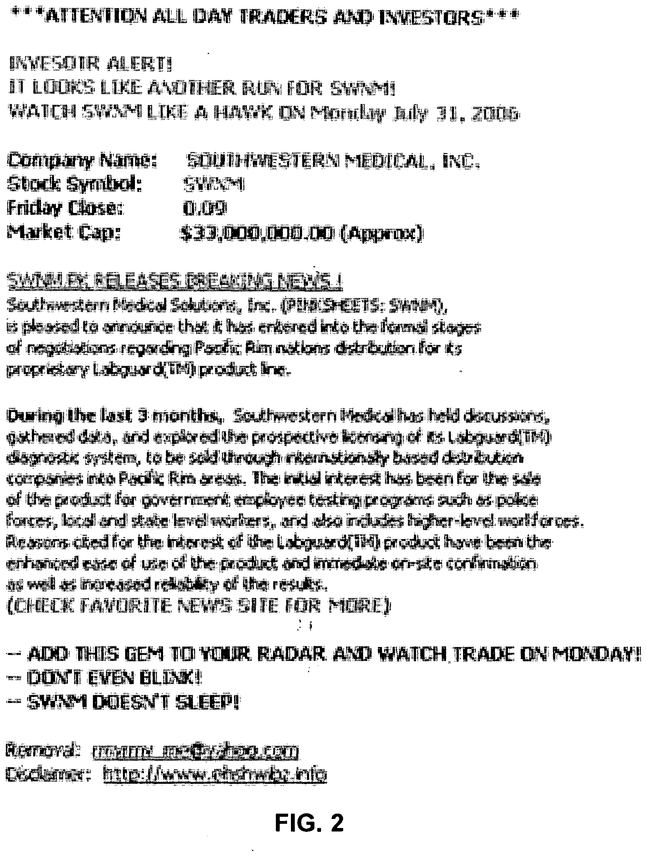

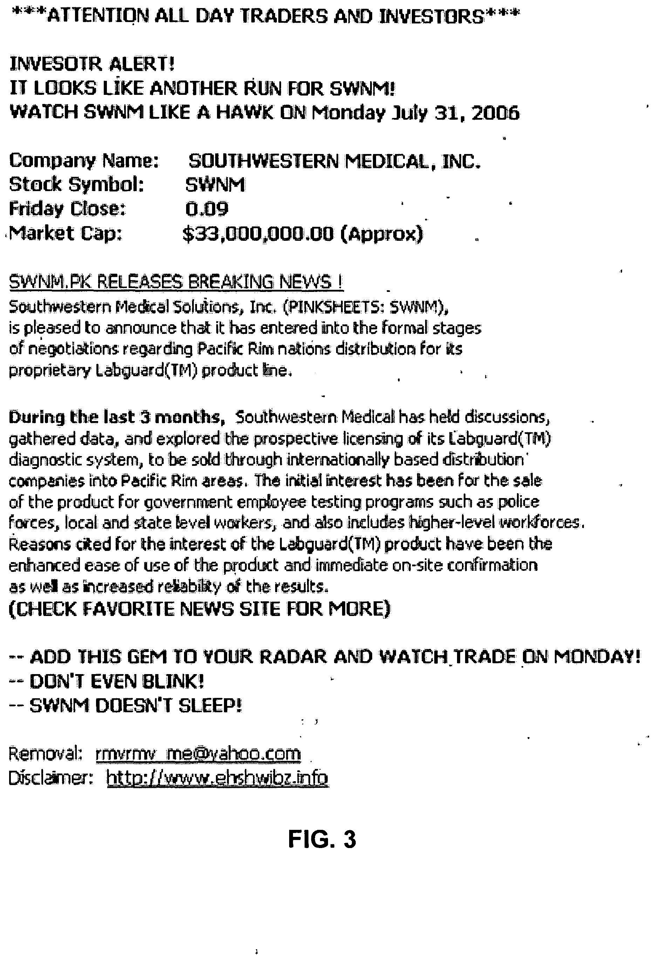

FIG. 1 illustrates an exemplary embodiment of the method for identifying text in an image according to one embodiment of the invention. As shown in FIG. 1, in step 101, the image is first converted, if necessary, from a vector form into a raster form (in other words, essentially, to a bitmap-type image). In step 102, if the image is a color image (see FIG. 2), it is converted to a two-color image (see FIG. 3). Although for purposes of the analysis it doesn't matter what the two colors are (they can be black and white, they can be red and green, and so on - as long as they are different), in the remainder of this discussion black and white will be used as examples.

An example of such an image is illustrated in FIG. 2, prior to conversion to a two color image, and the image in FIG. 3 is the black/white image after the conversion. Note that in a black/white printout, the image in FIG. 2 appears somewhat blurry, while a printout of the black/white version of FIG. 3 appears sharper. However, this is an artifact of the perception of the human eye - the original color image of FIG. 2 and the black/white image in FIG. 3 are similar in terms of "sharpness," to the human eye.

In step 103A, the background color is identified. In this discussion, white color will be used as the background color, and black will be used as "the other color", although it will be appreciated that this is entirely arbitrary. In step 103B, the algorithm counts the number of pixels in one that are different from the background color. Presumably, these pixels are associated with the text, although at this point this is only a presumption, and it is expected that at least some of these pixels represent noise or random data (possibly deliberately added to the image by the spammer).

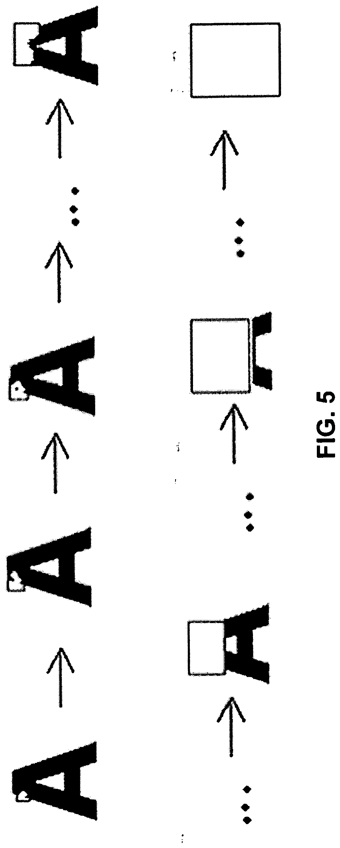

Steps 104A and 104B should be viewed together. In step 104A, the boundaries of the contour around each symbol are identified. In step 104B, all the pixels inside the contour are filled with the background color (in this example, filled with white, see also FIG. 5). The contour is a boundary within which a symbol is presumably found and which fully encloses the symbol. The symbols can be letters, numbers, punctuation signs, etc. The contour, in the preferred embodiment, is a minimal rectangle that completely encloses the symbol, although other shapes of the contour are also possible. Algorithmically, the rectangle can be specified by its four corners or by its two opposite corners (in the Cartesian coordinates or in any number of ways) the important point is that the contour completely encloses the symbol, or what is at this point is a suspected symbol.

The process of generating the contour and filling the contour with the background color is illustrated in FIG. 5, using letter A as an example. Upon encountering a pixel that presumably belongs to a symbol, in other words, a black pixel, the algorithm starts with a "rectangle" that begins with just a dot. Then the adjacent pixels are checked. If the adjacent pixel to the left of the current pixel is also black, then the boundary of the contour expands to the left. If the pixel to the right of the current pixel is black, then the contour boundary shifts to the right. The same process is repeated for all 8 adjacent pixels, and the algorithm proceeds as illustrated in FIG. 5, expanding the contour, and also filling the contour with the background color.

In steps 104A-104B, the size of the contour can be iteratively increased in the relevant direction by a predetermined amount, for example, by one pixel, by a certain number of pixels, or by some relative amount, for example, by 1/3, or 1/4, of the current size of the contour in that dimension. The algorithm is generally recursive and carries out the following:
(1) A first black pixel is picked out and assigned as a "current" pixel (note that there is no requirement that the point be at the edge of the symbol, although in practice, this is often the case). The contour, at this point, encloses the first black pixel (or is equal to only one pixel);
(2) Next, the current pixel is filled with the background color;
(3) If the current pixel is outside the contour, the contour is expanded to reach the current point (only those boundaries of the contour which are necessary to expand are actually expanded);
(4) for all adjacent black pixels, step 2 is repeated.

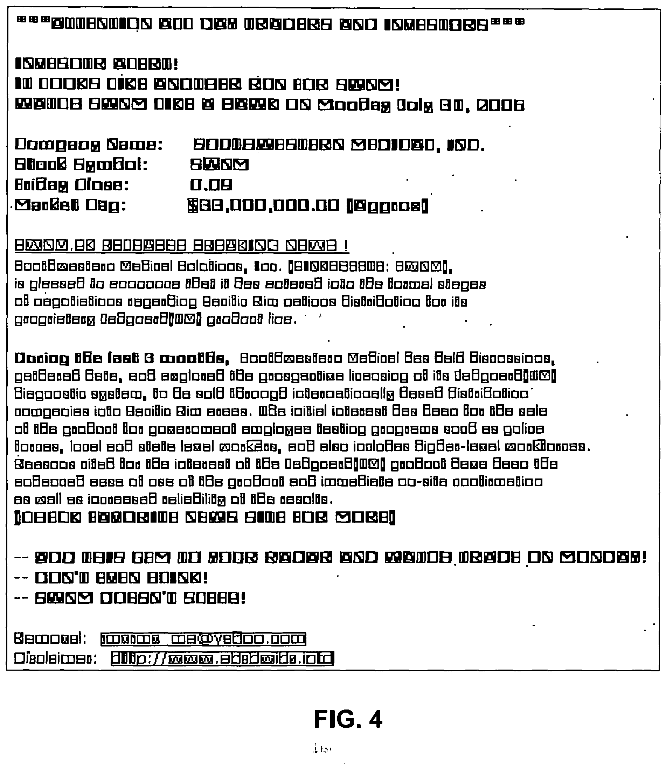

Upon completion of steps 104A and 104B, the image can be represented by what is shown in FIG. 4, which contains a number of contours that presumably represent (enclose) allletters/symbols.

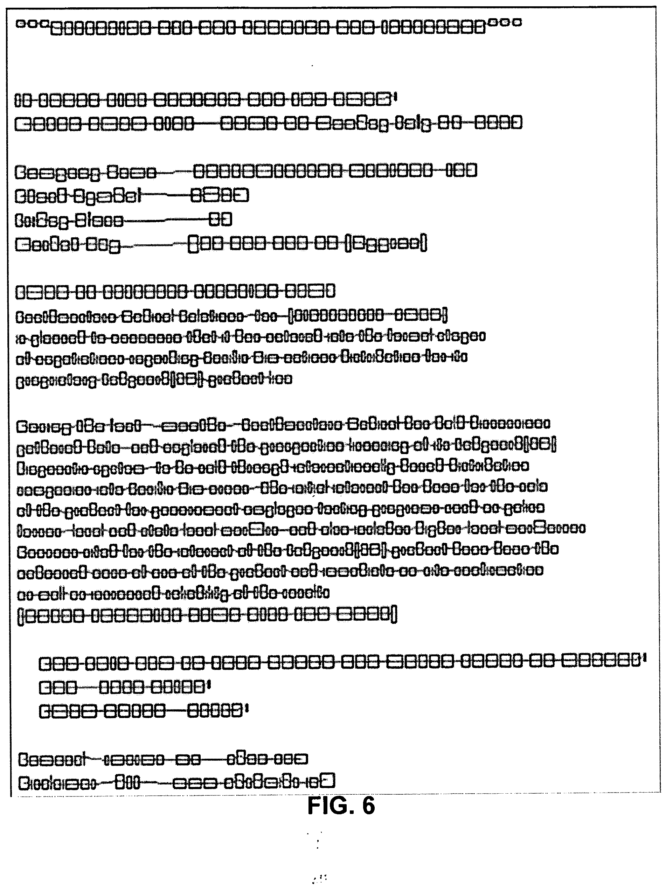

The next task is to filter out those contours that are either too small or too large. Empirically, it has been observed that SPAM very rarely contains relatively large letters. Relatively small contours (e.g., only a few pixels by a few pixels, such as 2 x 2 pixels, or 3 x 3 pixels) are most likely due to noise, rather than an actual letter or symbols. Therefore, in steps 105 and 106, for each contour its size is checked, and those contours that are either too small in size, or too large in size, are "thrown out." For example, with reference to FIG. 5, the contour around the first asterisk at the top left corner would remain unchanged, but contours that are too small (a contour around a small dot) would be removed from consideration (FIG. 6).

Contours that are too large can be identified in various ways. For instance, after removal of contours that are too small, the median contour size of the remaining contours may be used as a basis for upper size limit criteria. For example, contours that have a major dimension that is five or more times the median major dimension of the remaining contours can be deemed as being too large. Other approaches may be recursive in nature (such as, for example, executing the next task on contours of various sizes and determining if they can be parsed into words; the size of those that cannot be parsed may be noted, and a size threshold may thus be determined).

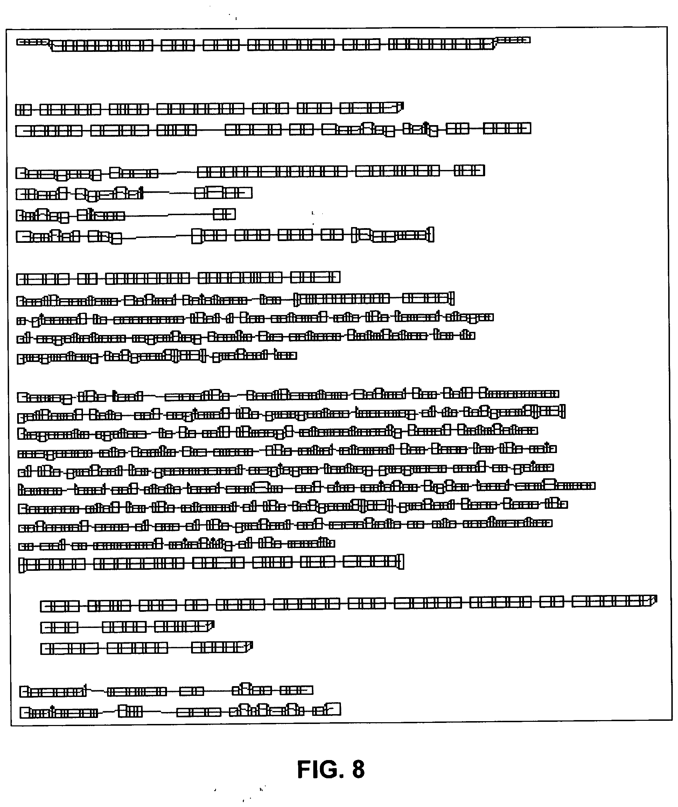

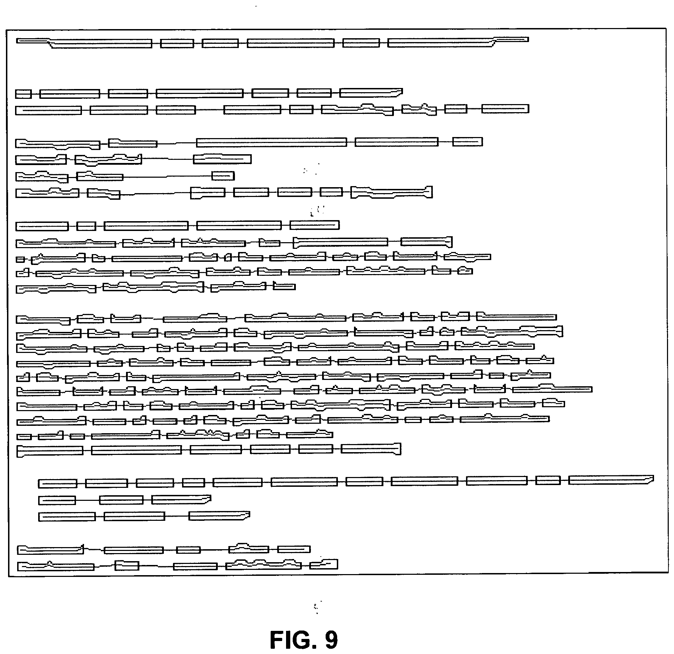

The next task for the algorithm is to identify the probable text lines (step 107), and then to parse the identified text lines into probable words (step 108) (see resulting FIG. 8). Once the probable words and lines are identified, the next task is to remove words that are too short or too long from consideration. This is accomplished in steps 109 and 110 (see resulting FIG. 8). Then, for steps 111 and 112, the text lines that are too short (e.g., having fewer than 2 or 3 words, as an example) are also removed from consideration (see resulting FIG. 9). At this point, the only contours that remain are those that presumably do not include any noise, do not include any randomly positioned letters or very short words, and which bear a high probability of containing text - if indeed the image does contain text.

Next, the algorithm needs to ensure that the likelihood of a false positive is low. To avoid the false positive, the number of pixels that are black are counted only within the contours that remain after steps 111 and 112 (to do this, the image in the form shown in FIG. 3 needs to be used, rather than the image with the contours filled in with white background color). The number of black pixels within the remaining contours (N2) is compared with the total number of black pixels (NI) in the black/white image in FIG. 3. If the ratio of the two numbers N2INI is less than a predetermined number (e.g., 40%,50%,60%, etc.), and there is at least one text line after filtration, then, in step 119, the algorithm concludes that the image contains text and should be analyzed for SPAM. Otherwise, in step 118, the algorithm concludes that the image does not contain text (or does not contain enough text to warrant further SPAM analysis).

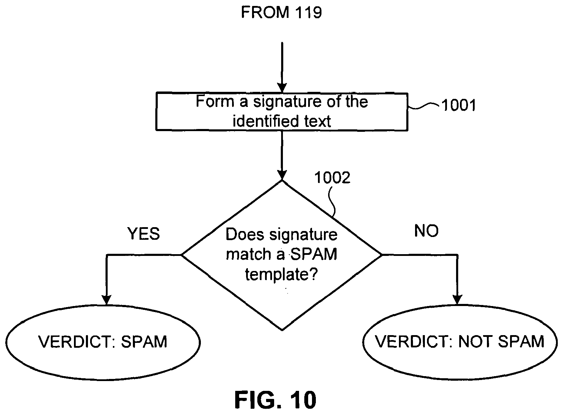

After step 119, the presumed text can be compared against a database of text signatures, see FIG. 10. Note that it is not actually the words or letters that are compared, but rather the signatures of the image in their contoured form. In other words, if such signatures were to be represented as images, they would roughly resemble the image in FIG. 9. In step 1001, a signature is formed for the text that was previously identified. Note that what is used as a signature is not words proper but the lengths of the words and the relative arrangement of the symbols (regardless of what the symbols are) in the text lines. In step 1002, the signature is checked against a SPAM template.

Note that for each particular SPAM image, there could be multiple variations, particularly where the spammers attempt to subvert the analysis by adding noise, moving the words and letters relative to each other slightly and using other tricks. Therefore, different SPAM messages could actually have the same signature or template. After step 1002, the algorithm can then render a verdict as to whether the image likely is a SPAM image, or does not contain SPAM.

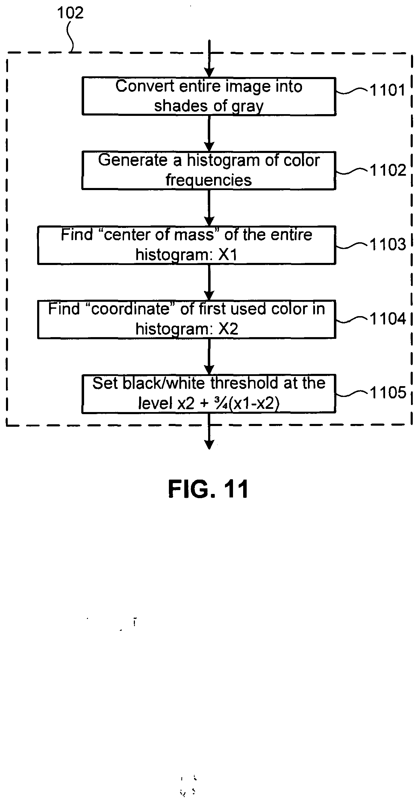

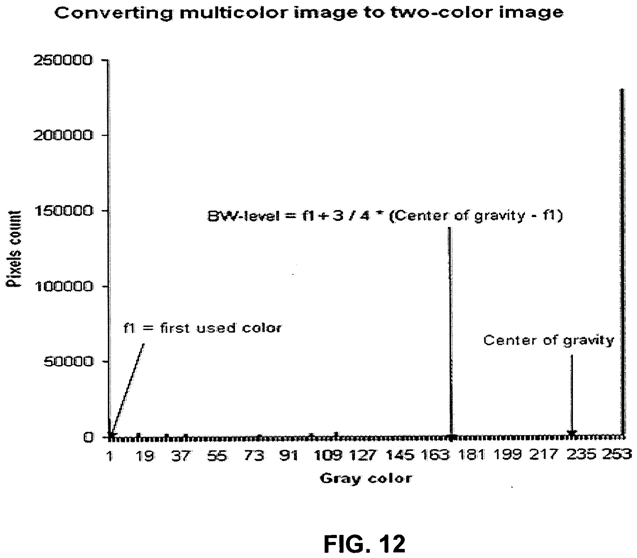

FIG. 11 illustrates the process of converting a multicolor image through a two-color image, see step 102 in FIG. 1. In step 1101, the image is converted into shades of gray. In step 1102, a histogram of color frequencies (i.e., shades of gray frequencies) is generated. An example of such a histogram is shown in FIG. 12. In step 1103, a center of mass of the histogram is identified. In step 1104, the X-coordinate of the first gray color used in the histogram is identified. In step 1105, the black/white threshold is set at the level of V. between the center of mass and the first color used. As an alternative, for step 102, all the colors that are darker than some specified color, for example, RGB (127, 127, 127) can be treated as black, and all colors that are lighter can be treated as white.

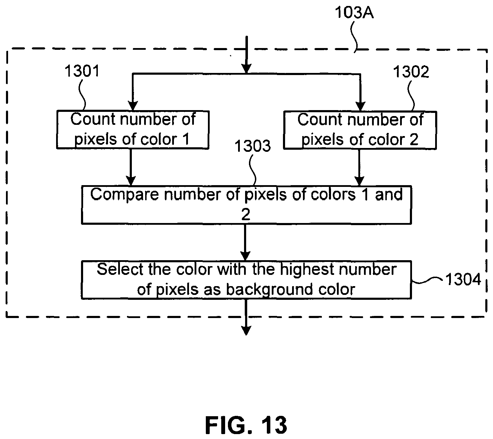

FIG. 13 illustrates how the background color is identified, corresponding to step 103 in FIG. 1. As shown in FIG. 13, a number of pixels of the first color are counted, in step 1301. Also, in step 1302, a number of pixels of the second color are counted. In step 1303, the number of pixels of the two colors are compared. The color with the highest number of pixels is then chosen as the background color in step 1304. Other mechanisms can be utilized for identifying the background color. For example, the region of the image that is roughly in the center (or at least enclosing the center) can be regarded as having text and the border of the image can be tested for some color which is dominant. That color can then be used as the background color.

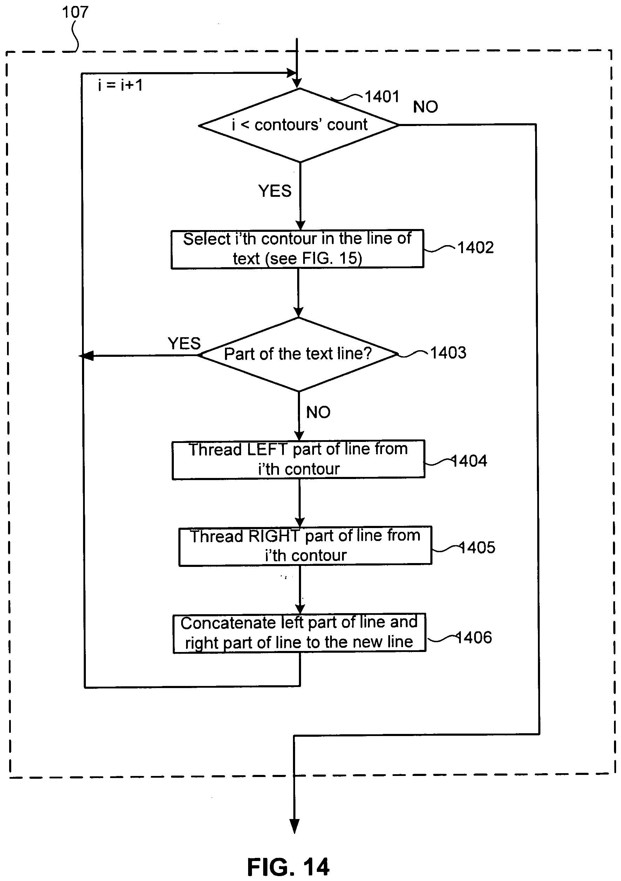

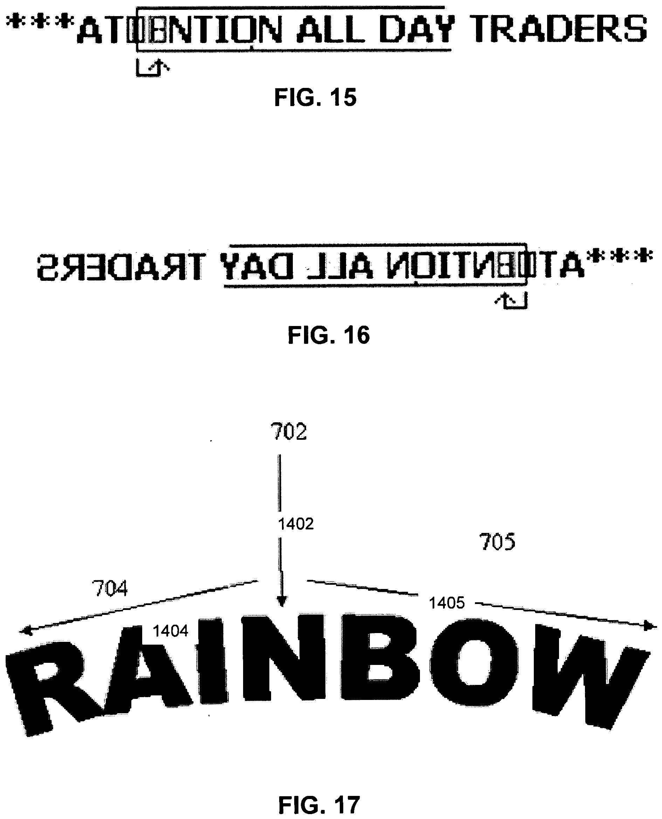

FIG. 14 illustrates how probable text lines are identified, see step 107 in FIG. 1. As shown in FIG. 14, in step 1401, the count of the contours is checked. If any contours are still remaining, the i-th contour in the line is checked. This is illustrated in FIG. 15, in this case for the first line of text in the message and for the sixth symbol, or contour in that line. In step 1403, the algorithm checks if the contour if it is already part of a text line. If it is, then, in step 1404, the algorithm threads to the left for the text line. This is illustrated in FIG. 16.

Then, in step 1405, the algorithm threads to the right, see FIG. 15. Note that this needs to be done to ensure that things like different fonts, or attempts to write a word using a wavy line arrangement, will not affect the process. In step 1406, the left and the right parts of the line are concatenated. Note that if, in step 1403, it turns out that a particular contour is already part of an identified text line, that contour does not have to be further considered for this operation.

A more common situation is the one where there is no threading to the left and the symbols can be taken from left to right and from top to bottom. However, if some of the text is rotated or written in a circle, then the first symbol must be the last symbol of the text line. The approach described herein works regardless of how the text is oriented, and without a prior knowledge of the arrangement of the text.

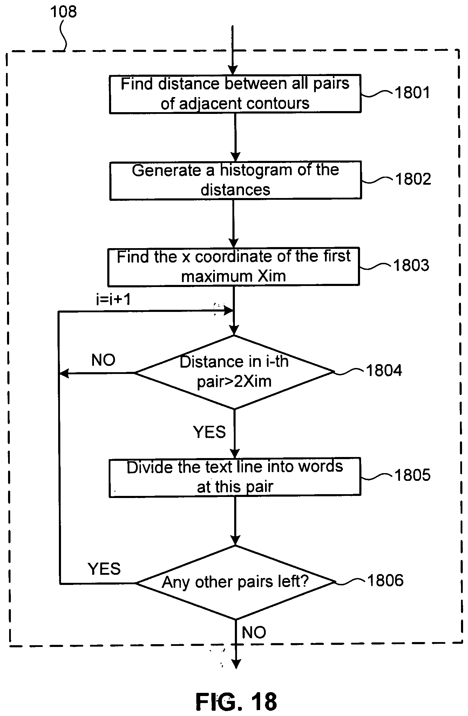

FIG. 18 illustrates the process of parsing text lines into probable words, see step 108 in FIG. 1. As shown in FIG. 18, first, the distances between all the adjacent pairs of contours are found, in step 1801. In step 1802, a histogram can be generated for the distances. In step 1803, the ex-coordinate in the histogram of the first maximum is identified. In step 1804, for the i'th pair of contours, the distance is checked to see if it is greater than 2 x Xim. If it is, then, in step 1805, the text line will be divided into individual words at that point. If it isn't, then the next pair or contours will be checked. In step 1806, if there are no other contours in the text line left to check, the algorithm proceeds to the next step (see 109 and 110 in FIG. 1). Otherwise, the remaining contours for any other lines will be checked using the same process.

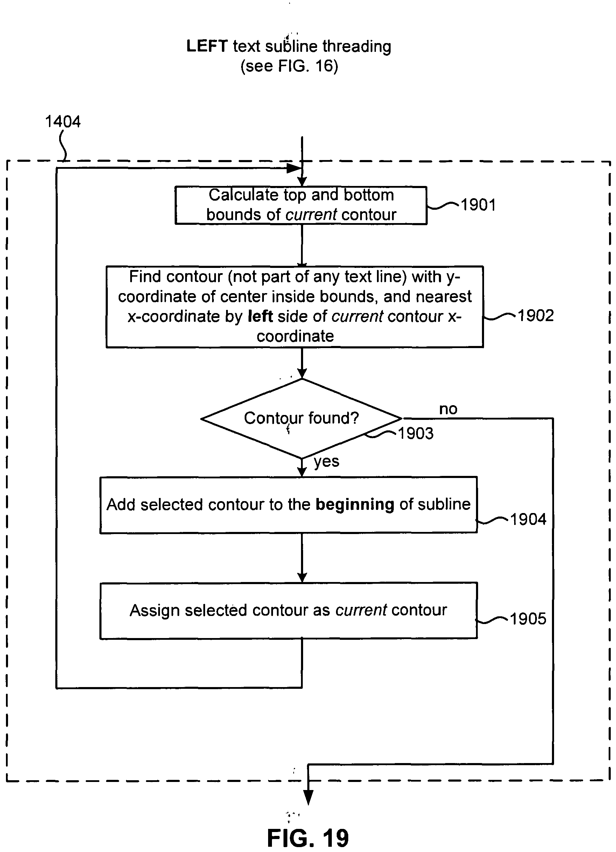

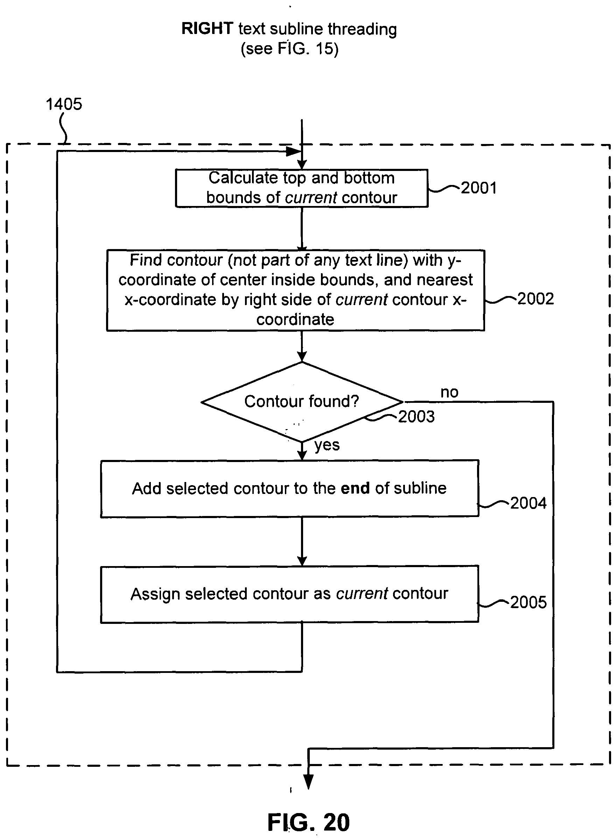

FIGs. 19 and 20 illustrate in detail the left-and-right threading steps of 1404 and 1405, with FIG. 19 showing the left threading, and FIG. 20 showing the right threading. These figures should be viewed with FIG. 17 in mind. As shown in FIG. 19, which is identical to FIG. 20 except for the left-right reversal, in step 1901, the top and bottom boundaries of the current contour are calculated. In step 1902, moving to the left, the algorithm looks for an adjacent contour.

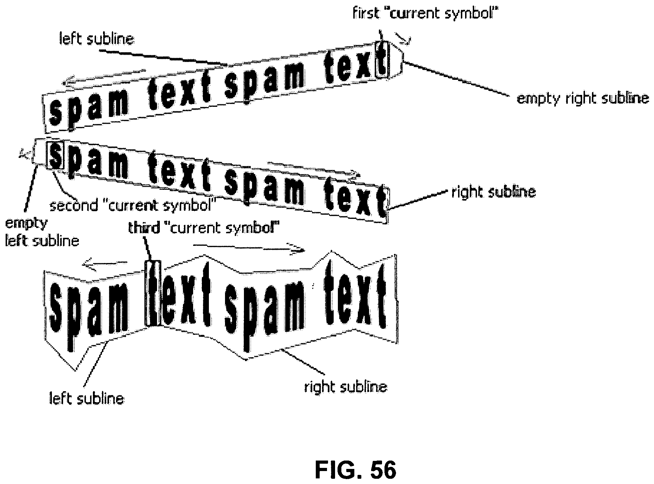

In FIG. 17, if the current contour corresponds to the letter N, then the adjacent contour would be the one that encloses the letter I in the word RAINBOW. In step 1903, if there is no contour found, then this is the end of that text line. If there is a contour found, then, in step 1904, the next contour (in this case, the contour for the letter I) will then become the current contour, see step 1905. The algorithm then returns to step 1901. A similar process takes place for right-threading (i.e., the "NBOW" part of RAINBOW). FIG. 56 is an another illustration of this process, showing that the process works equally well in both directions, regardless of which symbol the process starts with, and with a general indifference to various artifacts, such as wavy lines, text orientation, etc.

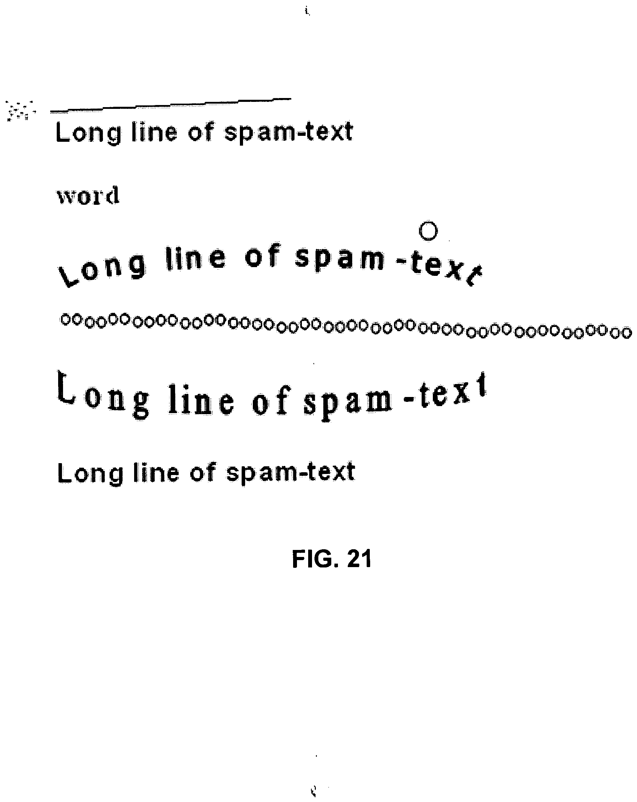

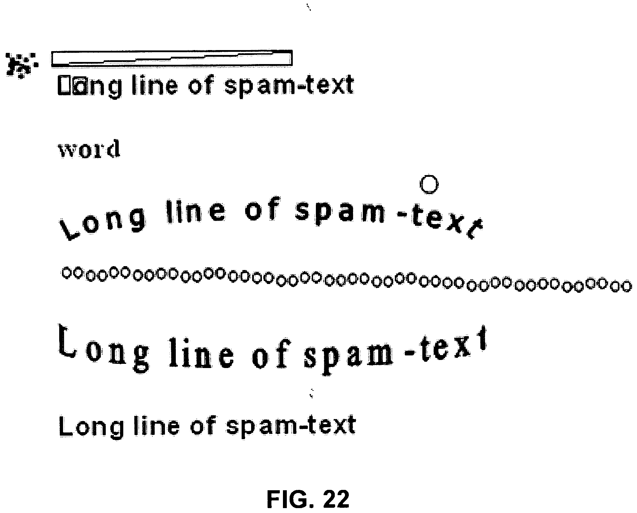

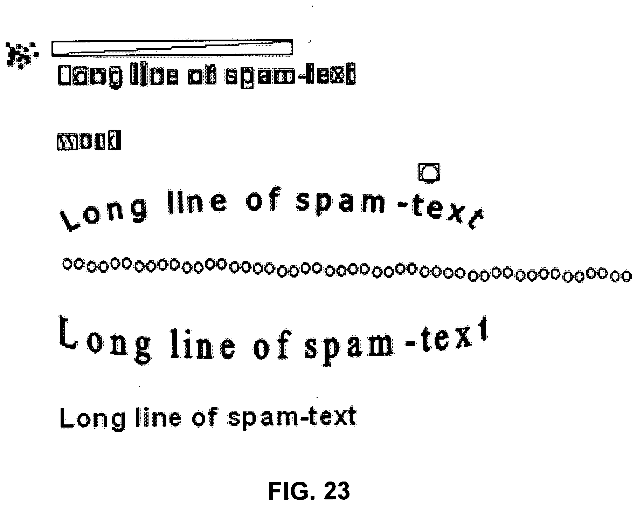

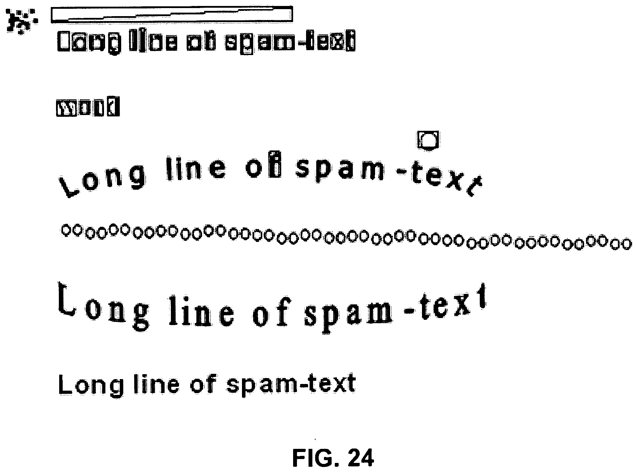

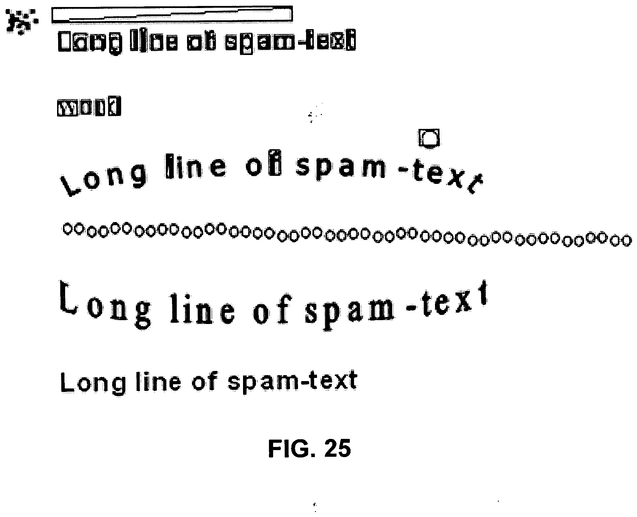

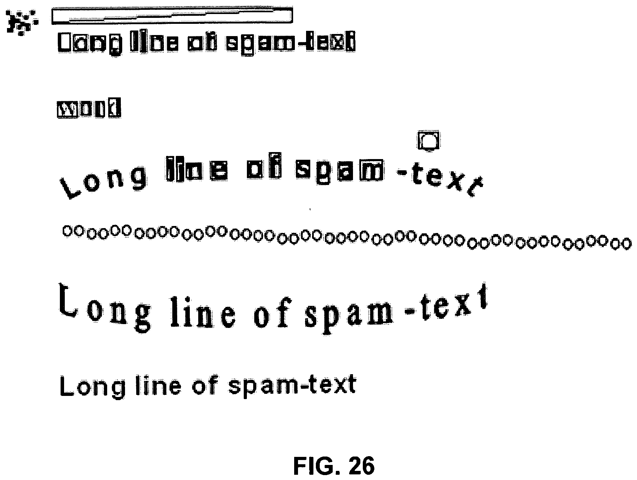

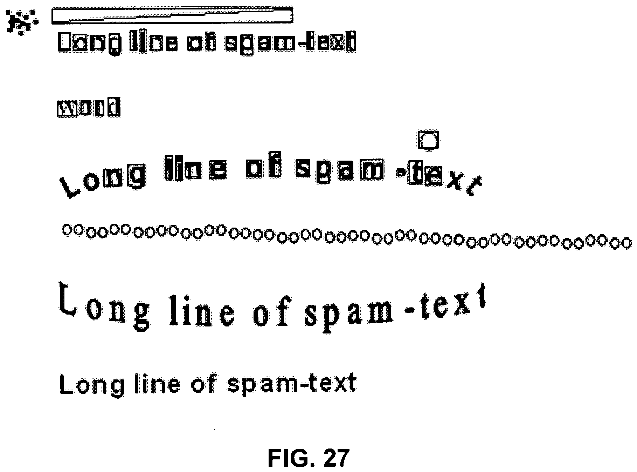

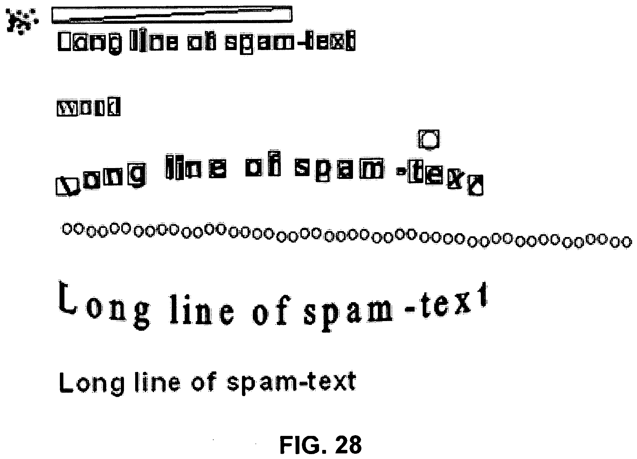

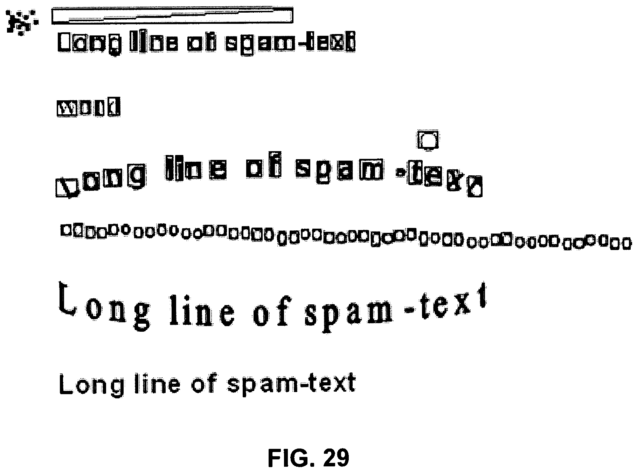

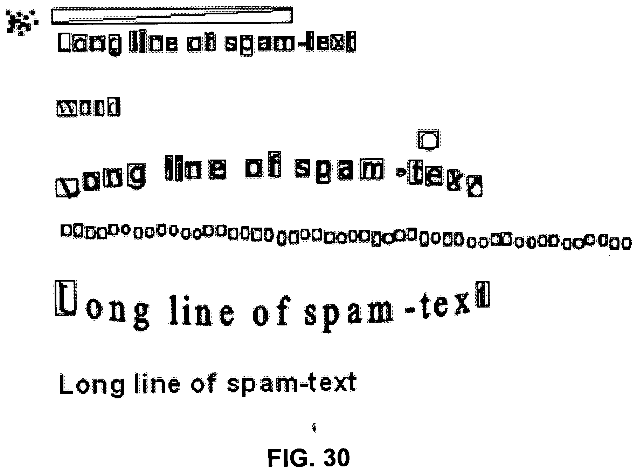

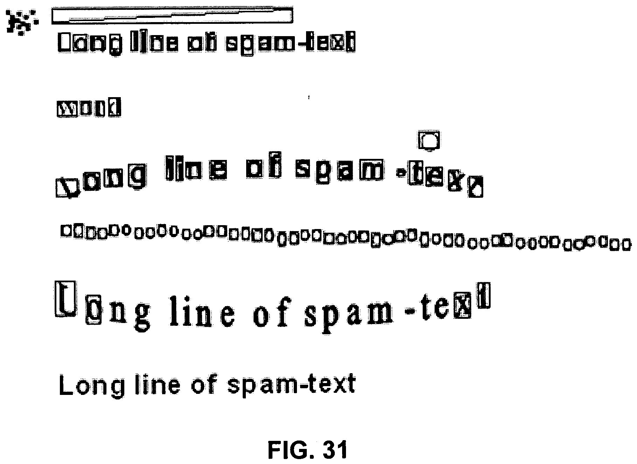

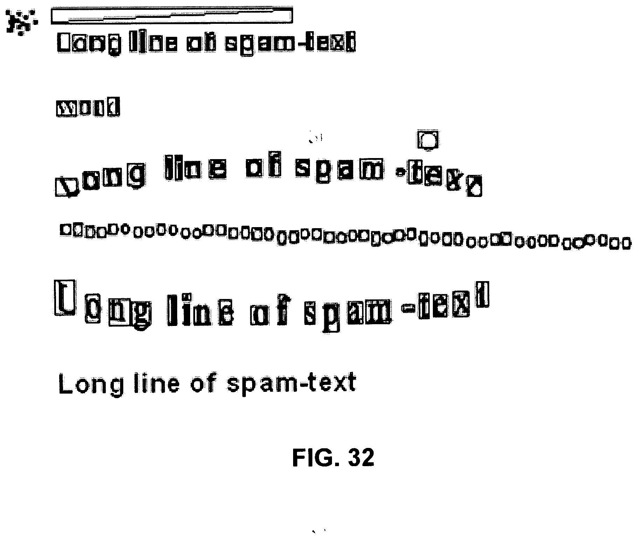

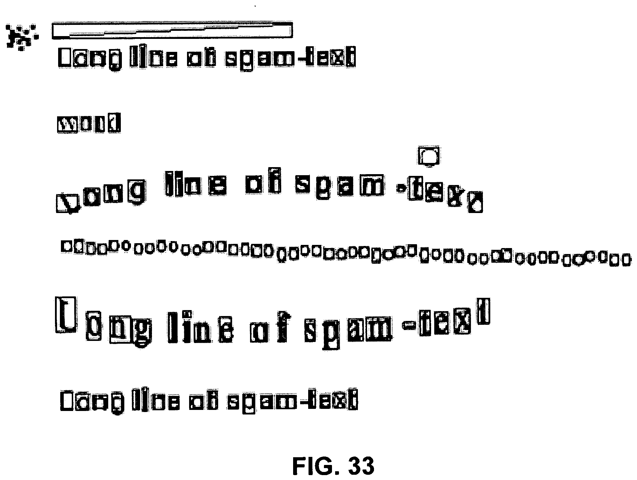

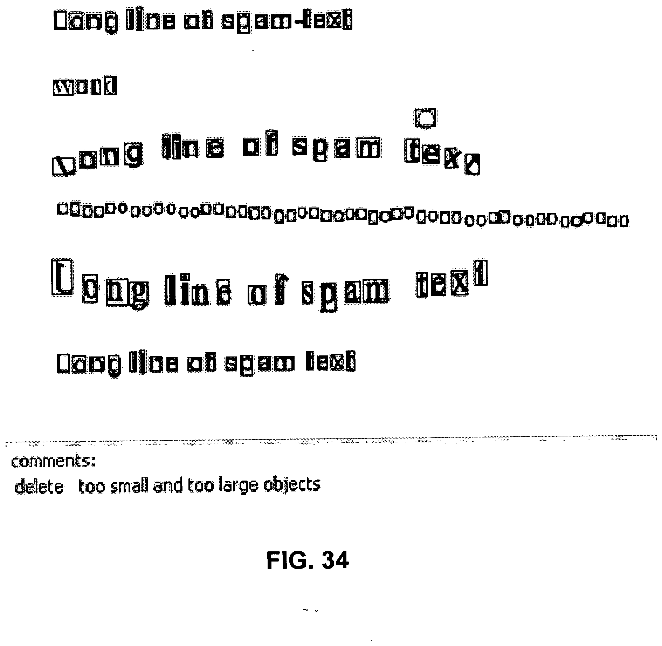

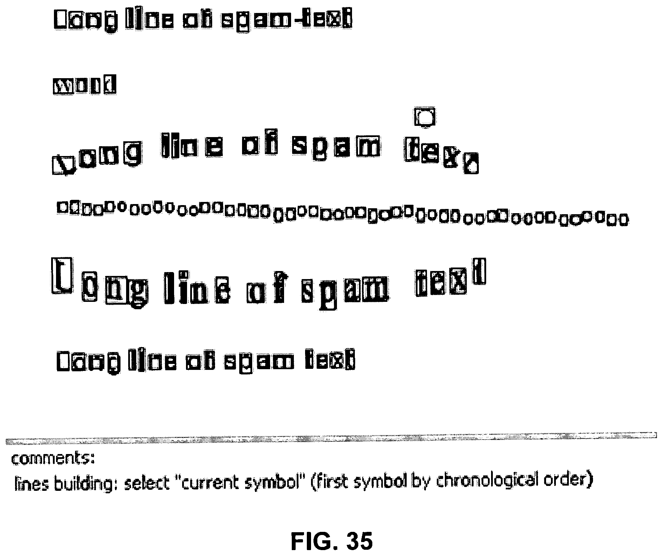

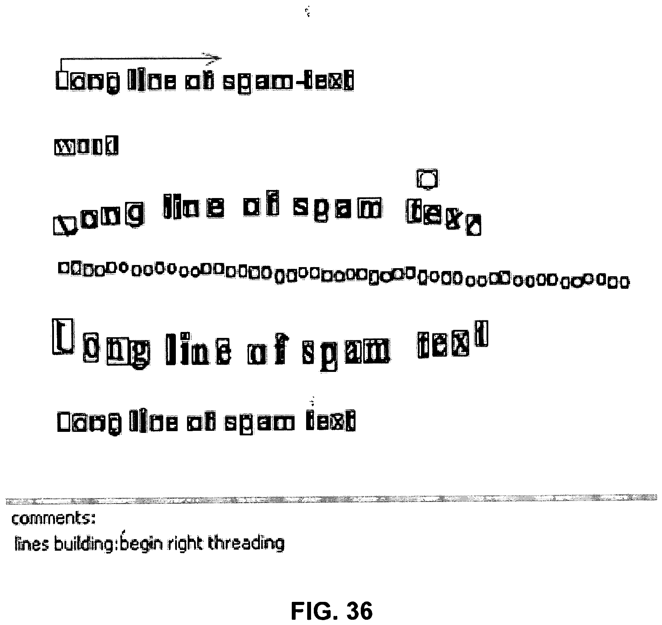

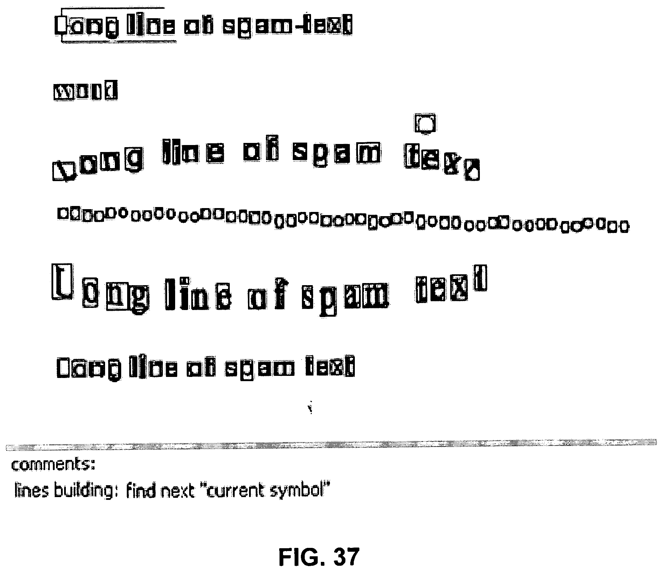

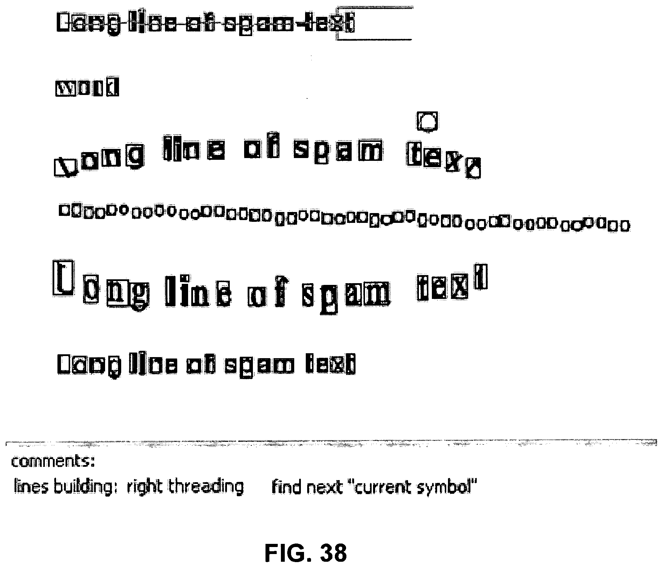

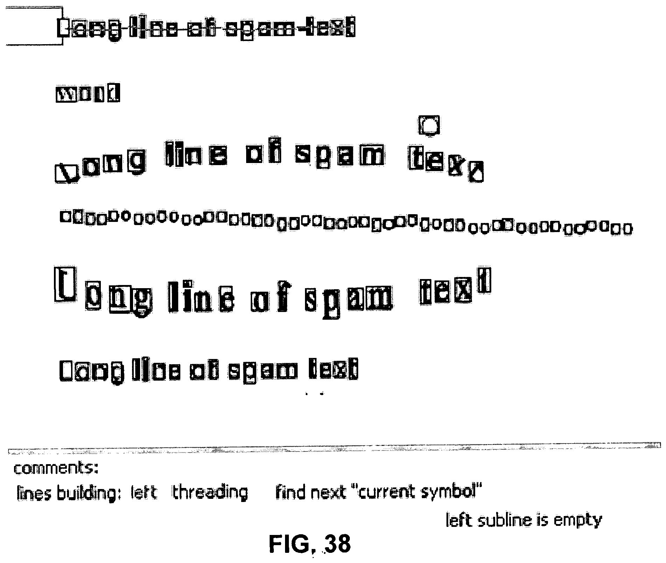

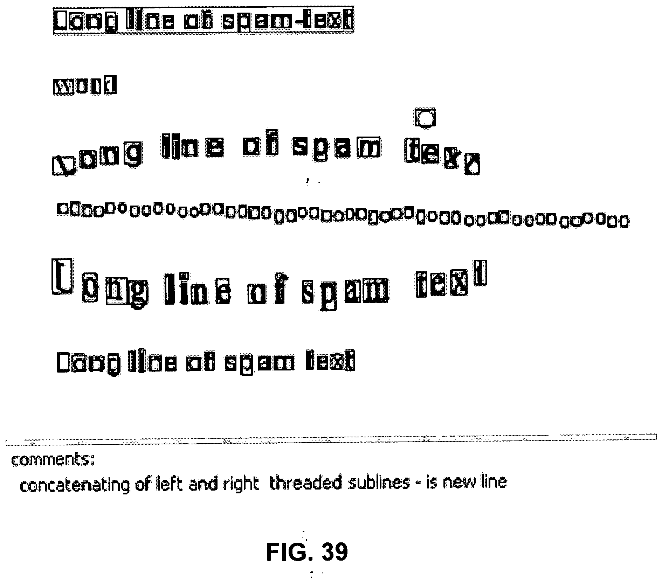

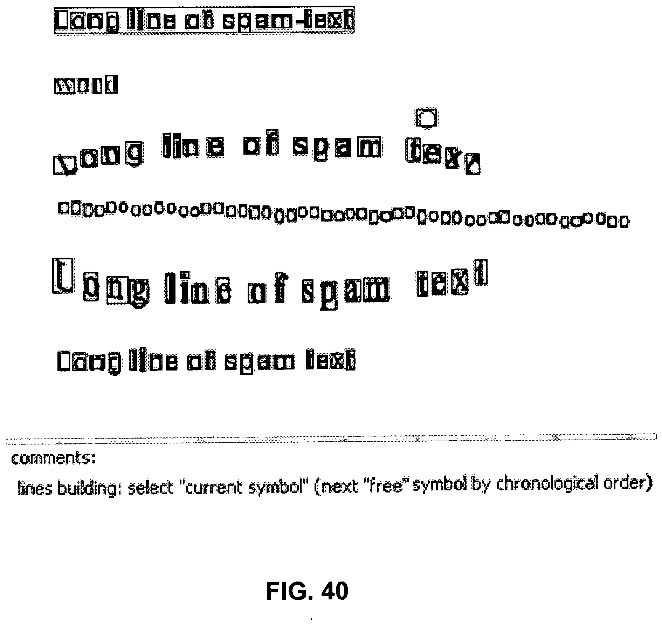

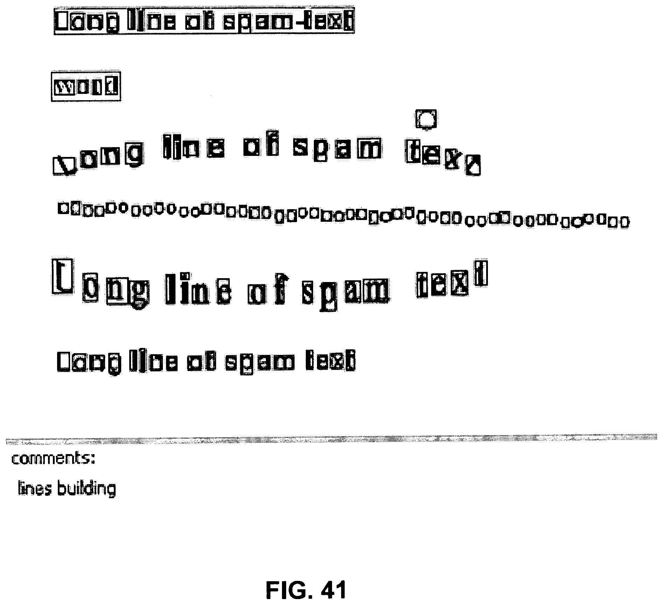

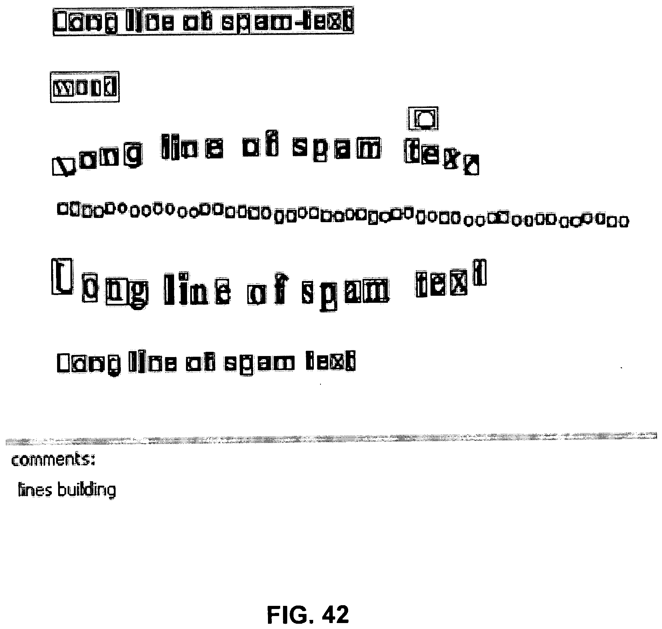

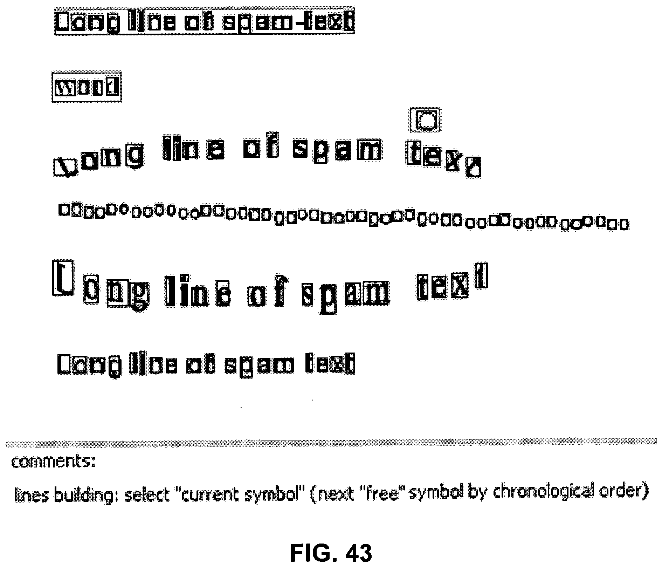

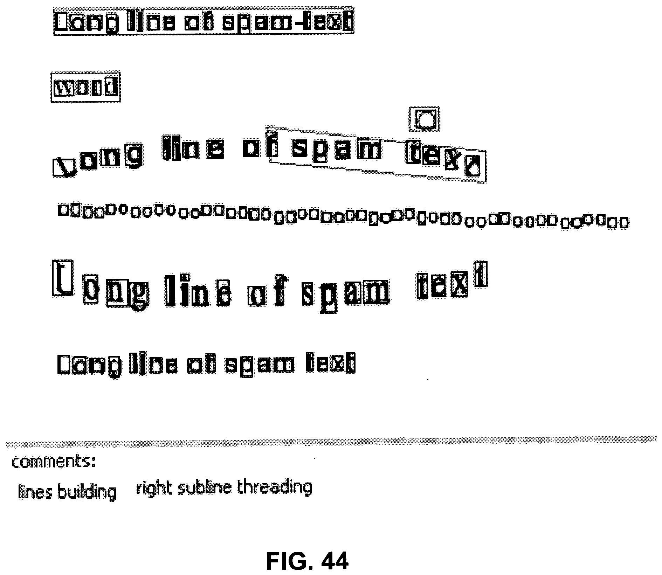

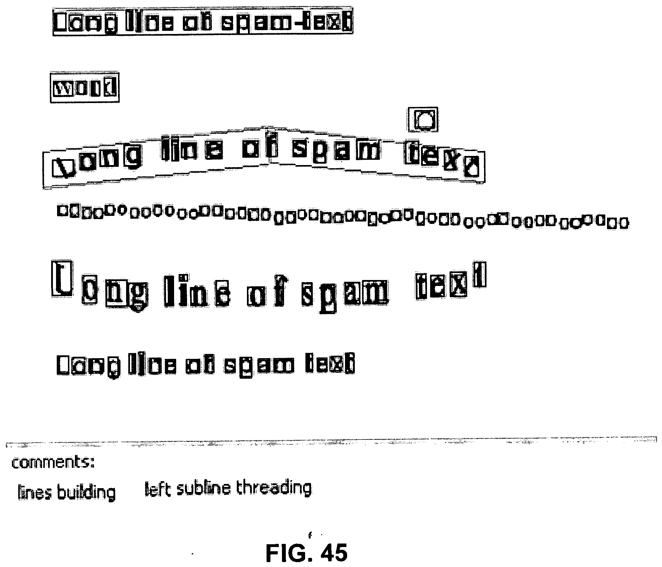

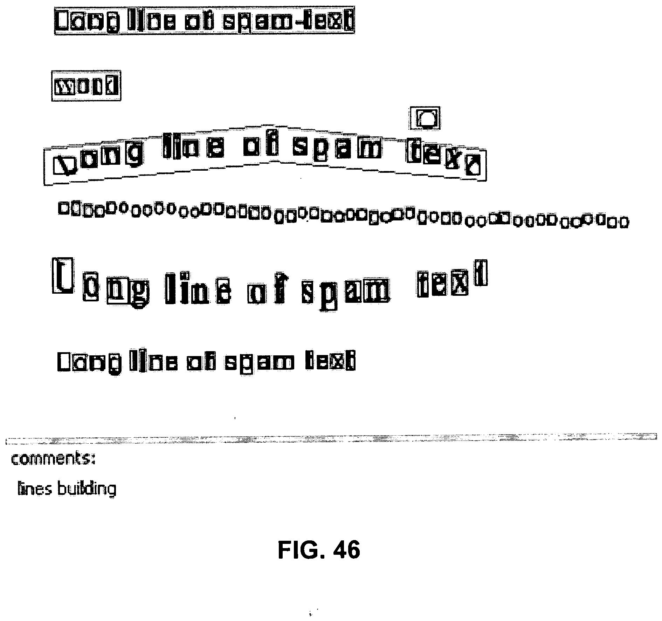

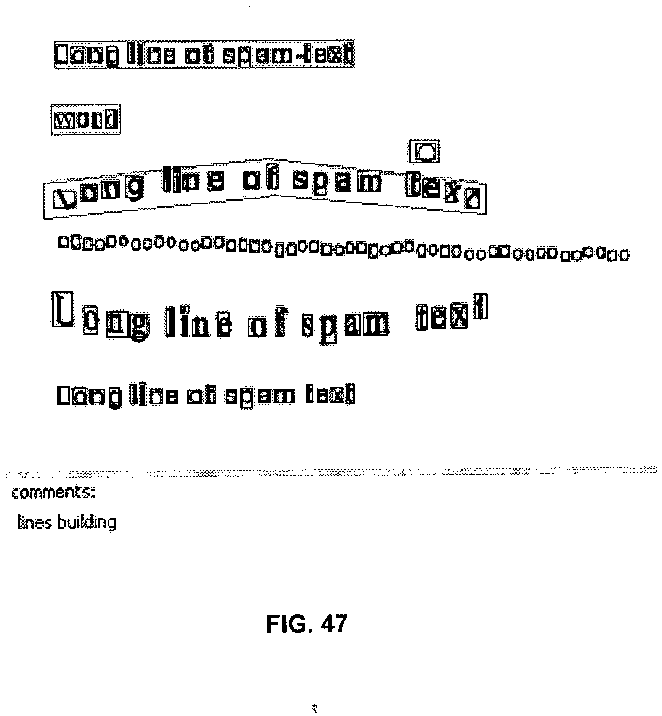

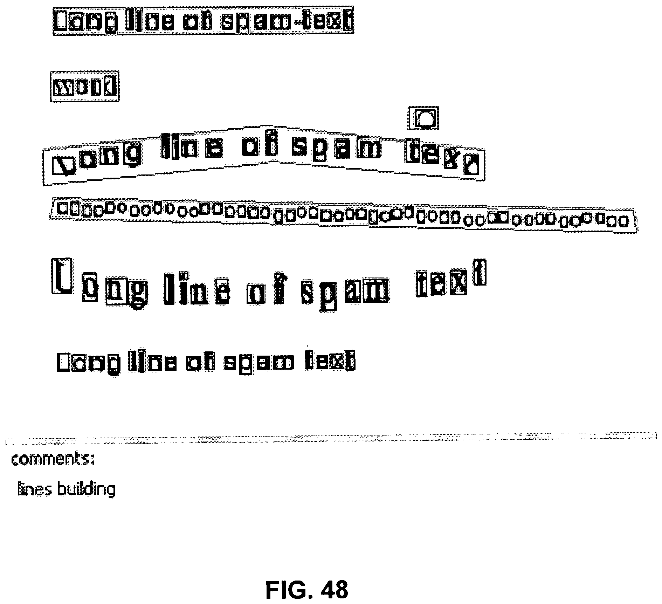

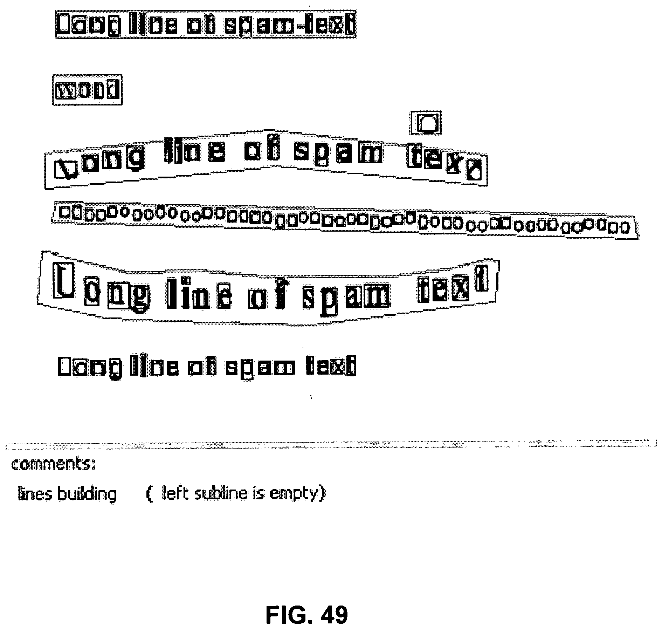

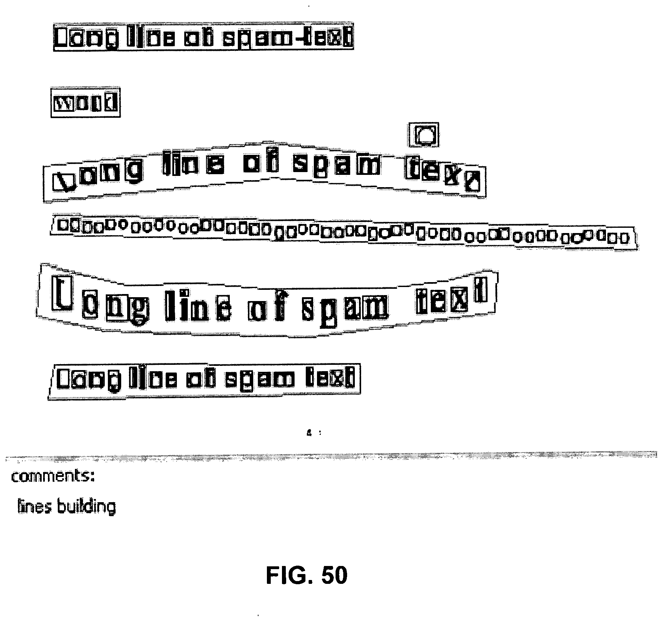

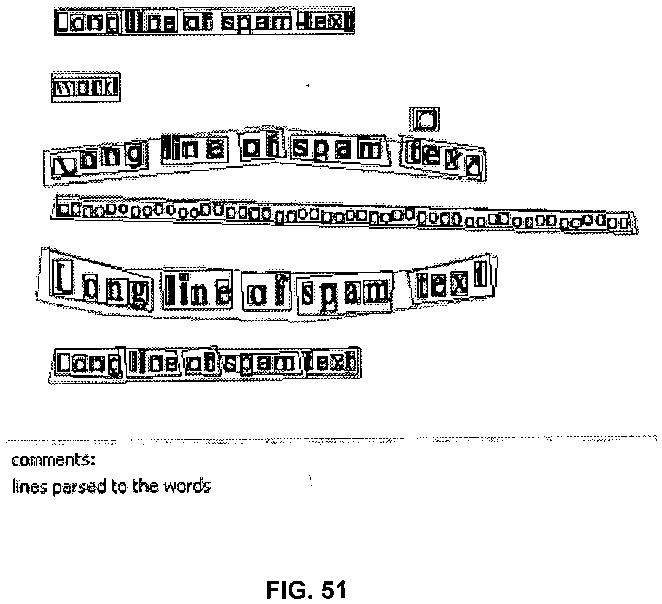

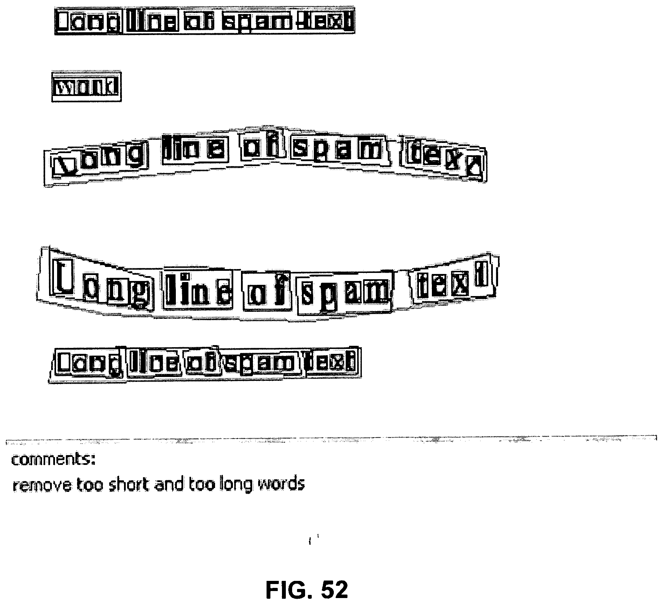

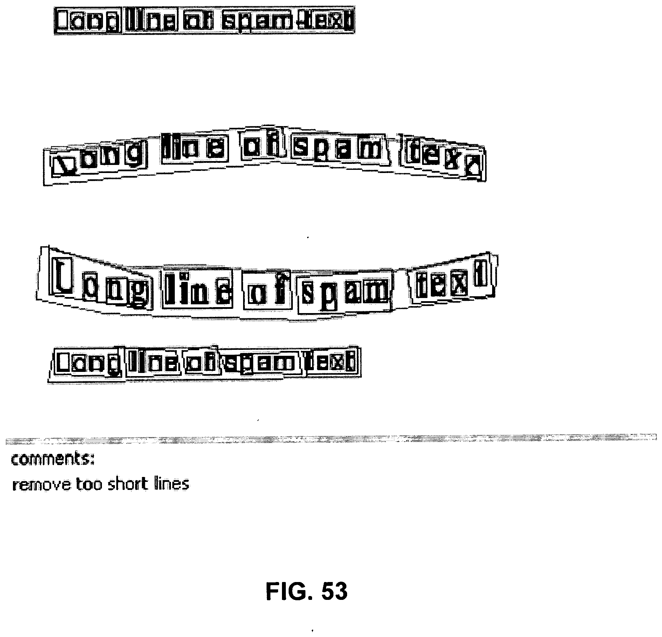

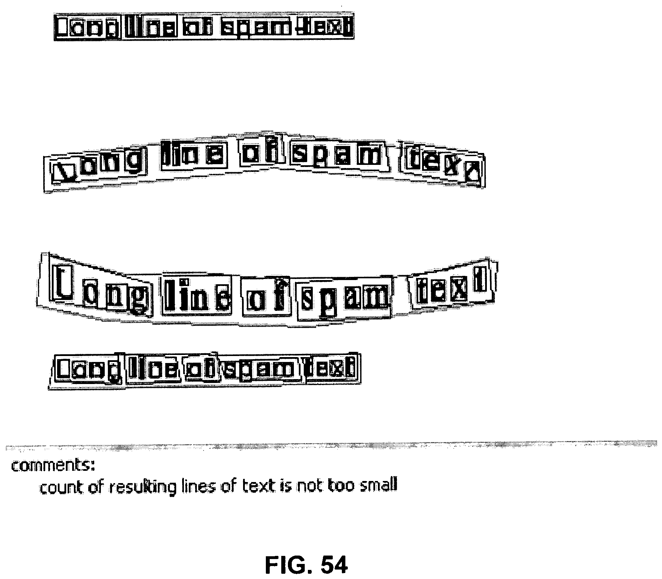

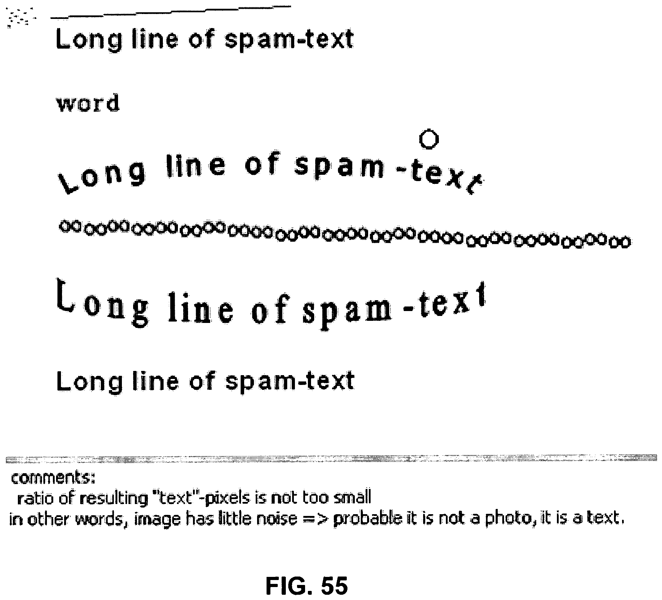

FIGs. 21-55 graphically additionally illustrate the process described earlier and with a commentary added to the figures to illustrate each step.

It should be remembered that conventional OCR algorithms are primarily intended to work on "friendly" documents - such as ordinary pages of text, faxes, scans of text documents and so on - in other words, the documents that were originally "documents" to which nobody has deliberately attempted to add artifacts designed to defeat OCR software. Spammers, on the other hand, are well aware that many mail service providers run attachments and other types of images through anti-SPAM filters that can include OCR. Therefore, such SPAM images, as noted earlier, are deliberately altered to defeat conventional OCR software.

The spammer needs only to add enough artifacts to the image to decrease the reliability of the OCR software to a low enough point (it does not need to be zero), so that the mail service provider will let the SPAM image through rather than risk a false positive. Such artifacts can include writing text in wavy or curved lines, writing some text at an angle, but not another, at an angle, writing some letters, but not different, at an angle, adding various backgrounds, random patterns, and so on, and varying the spacing between the letters. As is well known by most users of OCR software, even for a very "clean" and "friendly" image, OCR software still often gives less than 100% reliability. For images that have been deliberately designed with anti-SPAM OCR defense in mind, the reliability of such OCR software is often low enough and cannot be relied upon.

On the other hand, using the approach described herein, most of artifacts added by spammers would not affect the reliability of SPAM detection. For example, in a situation where two letters of a word are deliberately spaced very close to each other, the conventional OCR software might be defeated by this - it might regard the two letters as a single letter and fail to recognize it altogether, or recognize it falsely.

In the present invention, such a phenomenon would not present a problem, since very likely there will be a signature in the database that will correspond to the same image known to be SPAM. Regardless of whether the two letters in the image are treated as a single contour, or as two separate contours, the signature, constructed for the antiSPAM database will be the same as in the image being analyzed - therefore a correct identification of the individual contours (versus aggregating two very closely spaced letters or symbols into a single contour) is not critical - SPAM would still be recognized as SPAM, based on having the same signature - without need to know what the exact in the image actually is.

Also, writing text in wavy lines, or curved lines, or orienting different letters and/or words at different angles does not present a particular problem with the approach described herein - in the example of the word "RAINBOW" described earlier, the contours of the letters corresponding to the word would still be recognized and the entire word would be recognized as a sequence of 7 symbols, notwithstanding the fact that the letters are written in a curved line. In other words, it is not the content of the symbols that are within the contours per se, but their relative relationship to each other - and the relative relationship to each other is much more difficult for the spammer to defeat using known tricks.

It will also be appreciated that many of the parameters discussed above can be set at the run time or can be made either fixed or variable. For example, a word considered neither too short nor too long can be a word that is between 2 and 16 symbols long - however, this is based on empirical observation, and there is nothing magic about this number. Different limits and parameters can be set for images that are already suspected of being SPAM, as opposed to an image about which nothing is known in advance.

For instance, where there is a reason to suspect that a particular image contains SPAM (either based on some other form of preliminary analysis or based on information about the sender, or based on, for example, image size and dimensions), the danger of a false positive is presumably less, which the higher the ratio of N11N2, the more probable is a "no SPAM" verdict. On the other hand, if it is found that the number of false positives is higher than expected, then various parameters, such as those discussed with reference to FIG. 1, can be tweaked as needed.

Note that in the case of images that are already in a rasterized form, step 101 is unnecessary, and, the remainder of the algorithm is the same. Also note that for an image that is received in a black and white form (or any other two-color form), step 102 need not be performed.

In yet another embodiment, a grey scale representation of a raster image can be used. Use of a grey scale raster image can be advantageous in terms of more precise representation of an original image for SPAM identification. When an original multicolor image is converted into its black and white representation, it is first converted into a grey image. An example of such an image is illustrated in FIG. 2, prior to conversion to a two-color image, and the image in FIG. 3 is the black/white image after the conversion. In order to generate a black and white image, a level of a grey scale is selected.

If a slightly wrong grey level is selected on the side of darkness, the resulting black and white image can be different from the original. For example, some letters can be glued together or symbols can overlap. In case if the selected grey level is too light, the letters and symbols can be represented in their disintegrated from (e.g., the letter "w" appearing as two "v's"). The same grey level is applied to the entire image, while the original text and symbols can be written in a different font and color. Thus, some symbols cannot be efficiently separated and defined. In these cases a resulting signature of the image cannot be very precise.

In the exemplary embodiment, the symbols are separated and defined in the grey representation of the image by selecting a sharpness profile of a symbol contour. The correct sharpness level of a symbol contour can be selected more easily and more precisely than a level of darkness of a symbol. The original image in raster form can be pre-processed by increasing its contrast and sharpness.

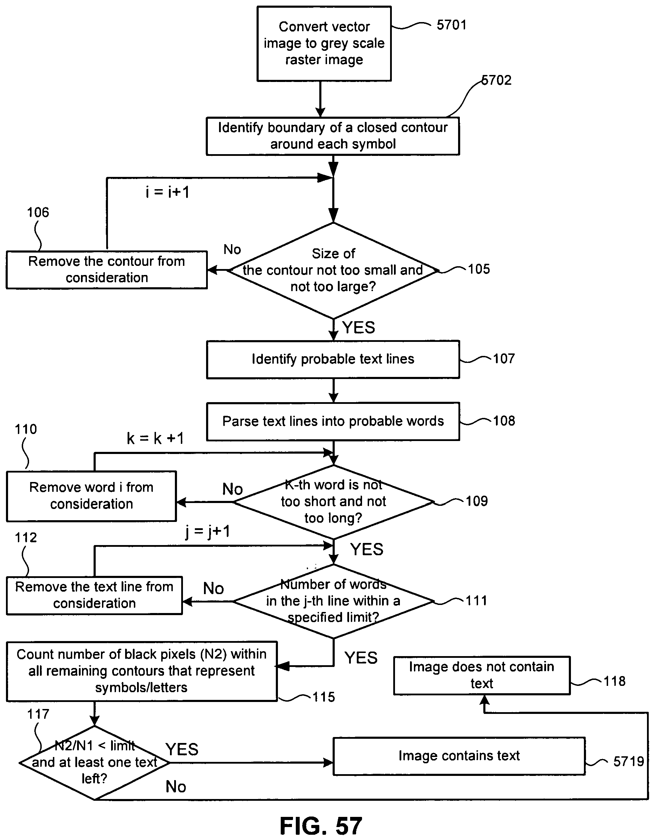

A basic algorithm of identifying text and symbols in a raster images using a grey scale representation is illustrated in FIG. 57. As shown in FIG. 57, in step 5701, the image is first converted, if necessary, from a vector form into a grey scale raster form (i.e., bitmap-type image). An example of such an image is illustrated in FIG. 2, prior to conversion to a grey scale image, and the image in FIG. 3 is the grey scale image after the conversion.

In step 5702, the boundary of the closed contour around each symbol is identified. The contour is a boundary within which a symbol is presumably found and which fully encloses the symbol. The symbols can be letters, numbers, punctuation signs, etc. The contour, in this embodiment, is a minimal rectangle that completely encloses the symbol, although other shapes of the contour are also possible. Algorithmically, the rectangle can be specified by its four comers or by its two opposite comers (in the Cartesian coordinates or in any number of ways). The important point is that the contour completely encloses the symbol, or what is, at this point, a suspected symbol.

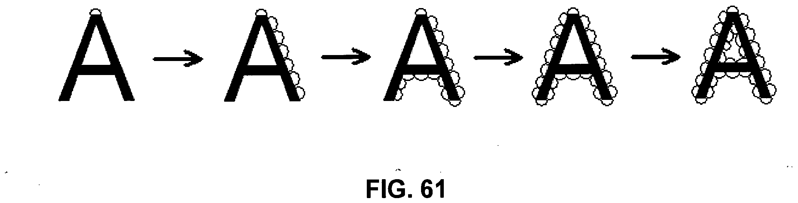

The process of identifying symbols in the contour is illustrated in FIG. 61, using the letter A as an example. Upon encountering a pixel that presumably belongs to a symbol, in other words, a dark pixel of particular sharpness, the algorithm identifies a next pixel that is similarly dark and of a particular sharpness, and connects them with a line. The process continues until encountering an angle in the symbol. The next tangent line is at an angle relative to the previous one. The process continues around the symbol, until the tangent lines, and the angles relative to each other (or to the horizontal), and/or possibly arcs, are identified (and the letter "w" will now appear not as two "v's" but as "w"). The same process can be performed on the inner "opening" of the letter A. This permits identifying the nature of the object (whether letter, or image), with some probability.

Therefore, in steps 105 and 106, for each contour its size is checked, and those contours that are either too small in size, or too large in size, are "thrown out." For example, with reference to FIG. 5, the contour around the first asterisk at the top left comer would remain unchanged, but contours that are too small (a contour around a small dot) would be removed from consideration (see FIG. 6).

The next task for the algorithm is to identify the probable text lines (step 107), and then to parse the identified text lines into probable words (step 108) (see resulting FIG. 8). Once the probable words and lines are identified, the next task is to remove words that are too short or too long from consideration.

This is accomplished in steps 109 and 110 (see resulting FIG. 8). Then, for steps 111 and 112, the text lines that are too short (e.g., having fewer than 2 or 3 words, as an example) are also removed from consideration (see resulting FIG. 9). At this point, the only contours that remain are those that presumably do not include any noise, do not include any randomly positioned letters or very short words, and which bear a high probability of containing text - if indeed the image does contain text.

Next, the algorithm needs to ensure that the likelihood of a false positive IS sufficiently low. To avoid the false positive, the number of pixels that are dark are counted only within the contours that remain after steps 111 and 112 (to do this, the image in the form shown in FIG. 3 needs to be used, rather than the image with the contours filled in with white background color). The number of dark pixels within the remaining contours (N2) is compared with the total number of dark pixels (N1) in the grey image in FIG. 3.

If the ratio of the two numbers N2INI is less than a predetermined number (e.g., 40%, 50%, 60%, etc.), and there is at least one text line left after filtration, then, in step 5719, the algorithm concludes that the image contains text and should be analyzed for SPAM. Otherwise, in step 118, the algorithm concludes that the image does not contain text (or does not contain enough text to warrant further SPAM analysis).

In yet another embodiment, the similar signatures of various image modifications are also taken in consideration. The images from the same SPAM broadcast can have slightly different versions and slightly different signatures. For example, two images of the same mail broadcast can have signatures that differ only by one digit:
AA080009111122111111111111110000 AA0800091111221111111111111 00000

These signatures are considered for being nearly the same (i.e., approximately matching) using the Levenshtein distance. The Levenshtein distance is a metric for measuring the amount of difference between two sequences (i.e., the so called edit distance). The Levenshtein distance between two strings is given by the minimum number of operations needed to transform one string into the other, where an operation is an insertion, deletion, or substitution of a single character.

In order for the Levenshtein distance to be used, word lengths of the entire text need to be used for signature generation, instead of a text digest. While this kind of signature is longer, it provides for increased efficiency and much better results in terms of false positives. Note that in the exemplary embodiment, the text IS optionally truncated to the first 300 words (for example) for convenience.

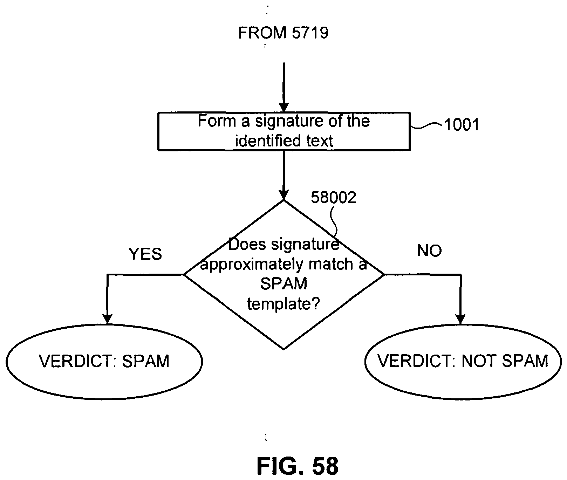

After step 5719, the presumed text can be compared against a database of signatures of texts using approximated matching, employing calculation of Levenshtein distance, see FIG. 58. Note that it is not actually the words or letters that are being compared, but rather the signatures of the image in their contoured form. In other words, if such signatures were to be represented as images, they would roughly resemble the image in FIG. 9.

In step 1001, a signature is formed for the text that was previously identified. Note that what is used as a signature is not the actual words or symbols, but the lengths of the words and the relative arrangement of the symbols (regardless of what the symbols are) in the text lines. In step 5802, the signature is checked against a SPAM template using an approximated matching method employing Levenshtein distance.

Note that for each particular SPAM image, there could be multiple variations, particularly where the spammers attempt to subvert the analysis by adding noise, moving the words and letters relative to each other slightly and using other tricks. Therefore, different SPAM messages could actually have the same signature or template. After step 5802, the algorithm can then render a verdict as to, whether the image likely is a SPAM image, or does not contain SPAM.

In yet another embodiment, SPAM can be identified in images having small amount of text without any limit to a minimum text amount. Having a limit for the minimum amount of text in the image can result in missed SPAM, while not having a limit, can result in many false positives. In this embodiment this problem is solved by defining angles of a symbol contour. The symbol contour is determined using an algorithm as describe above.

Then, a line is drawn through each pair of adjacent pixels of the contour. An angle of this line to the horizon level is recorded. Then, moving in clockwise direction, the value of this angle is replaced by a difference between this angle and the angle recorded for the nearest previous point of the contour. If the contour does not change its configuration, this difference equals to zero and a segment of a straight line is formed.

In this embodiment, straight lines are replaced by zero strings or strings containing small numbers. Thus, straight segments of a line are defined. If the difference between the angles remains constant over a certain part of a contour, an arc is defined instead of a line segment. According to the exemplary embodiment, parameters such as angles between the line segments, the segments' lengths, the arcs' length and the arcs' radii, are used as text measurements.

This way, even a very small amount of text can produce sufficient amount of unique measurements for making safe and reliable, in terms of false positives, SPAM or NO SPAM verdict. Thus, the exemplary embodiment allows for lifting a minimum amount of text limit of an image (i.e., a signature of an image can be generated using any small text or essentially almost no text at all). The symbol contours are defined by the same method that uses sharpness level of a grey scale image representation. The text-related measurements taken from the image are used for SPAM definition by a method described above.

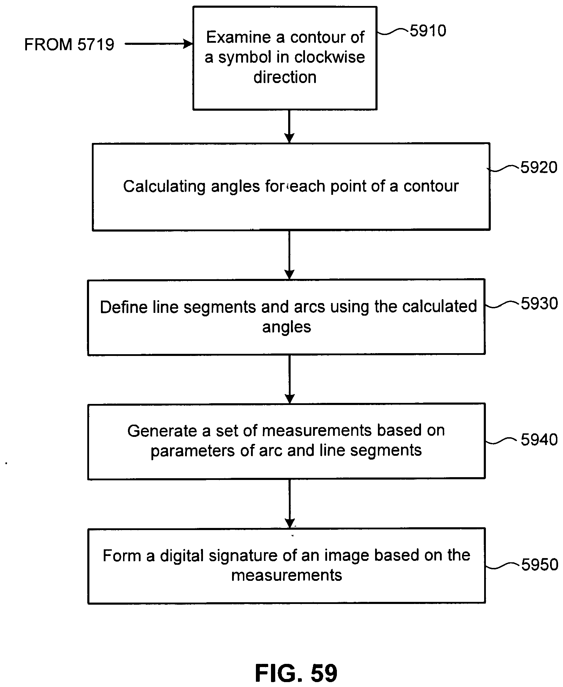

This aspect is illustrated in FIG. 59. A text symbol contour defined by the method depicted in FIG. 57 (see block 5719) is examined in a clockwise direction in step 5910. In step 5920, an angle is calculated for each point of a contour. A line is drawn through each pair of adjacent pixels of the contour. An angle of this line to the horizon level is recorded. Then, moving in clockwise direction, the value of this angle is replaced by a difference between this angle and the angle recorded for the nearest previous point of the contour.

If the contour does not change its configuration, the angle equals to zero and a segment of a straight line is formed. In step 5930, straight segments of a line are defined by zero filling described above. If the difference between the angles remains constant over a certain part of a contour, an arc is defined also in step 5930.

In step 5940, parameters such as angles between the line segments, the segments' lengths, the arcs' length and the arcs' radii, are used as text measurements. Then, in step 5950, the measurements of a grey scale image collected in step 5940 are used for forming a signature of the image. The signature can be compared to a SPAM template using approximate matching method, as shown in FIG. 58. Note that the line segments and arcs can also be used for analyzing the images containing no text symbols. It requires including a large number of measurements into an image signature.

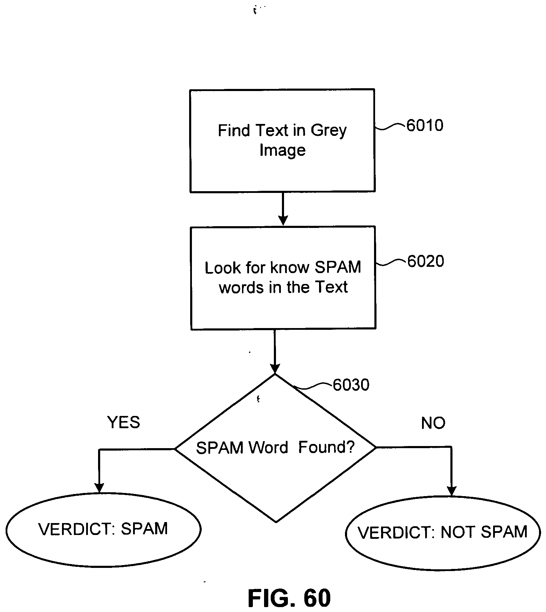

In yet another exemplary embodiment, the identified text is parsed for known SPAM words (such as, for example, porn, Viagra, enlargement, etc.) as shown in FIG. 60. In step 6010, text is identified in a grey image by the method described above. The identified text is parsed for known SPAM words in step 6020. If at least one known SPAM word is found in the text in step 6030, the text is considered to be SPAM.

It will be appreciated that many of the visual and mathematical constructs discussed herein are primarily of use as an aid to understanding the algorithm. In fact, it is unnecessary, for example, to actually construct the histogram of FIG. 12- in a real-life system, only the final result matters and not the intermediate visualization aids. Similarly, there is no need to create an actual image with the "filled-in" contours - an equivalent binary data representation will also suffice.

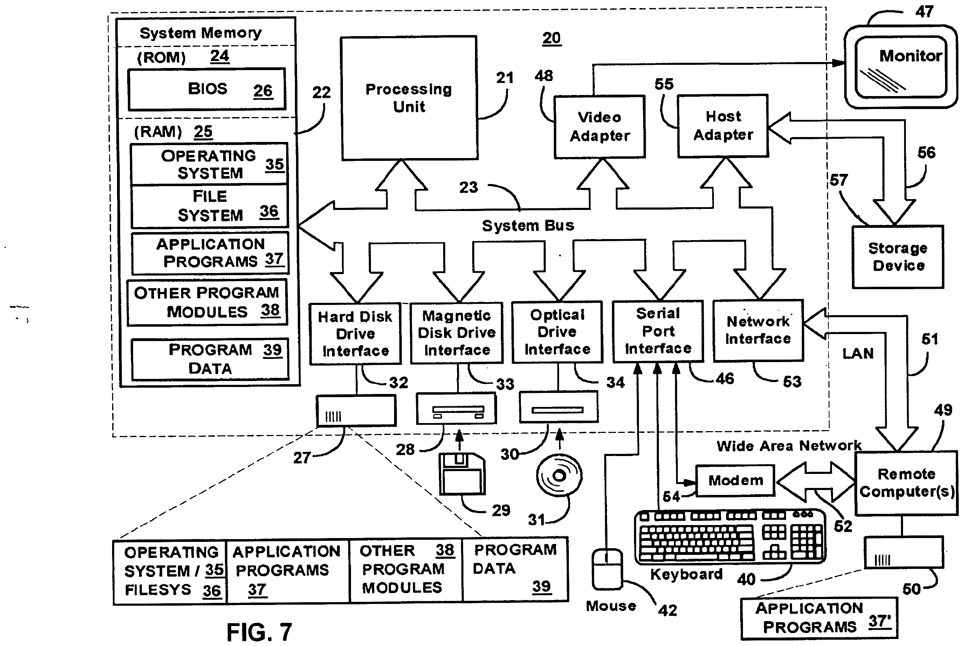

With reference to FIG. 7, an exemplary system for implementing the invention includes a general purpose computing device in the form of a computer or server 20 or the like, including a processing unit 21, a system memory 22, and a system bus 23 that couples various system components including the system memory to the processing unit 21. The system bus 23 may be any of several types of bus structures including a memory bus or memory controller, a peripheral bus, and a local bus using any variety of bus architectures. The system memory includes read-only memory (ROM) 24 and random access memory (RAM) 25.

A basic input/output system 26 (BIOS), containing the basic routines that help to transfer information between elements within the computer 20, such as during startup, is stored in ROM 24. The computer 20 may further include a hard disk drive 27 for reading from and writing to a hard disk, not shown in the figure, a magnetic disk drive 28 for reading from or writing to a removable magnetic disk 29, and an optical disk drive 30 for reading from or writing to a removable optical disk 31 such as a CD-ROM, DVD-ROM or other optical media.

The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide a non-volatile storage of computer readable instructions, data structures, program modules and other data for the computer 20.

Although the exemplary environment described herein employs a hard disk, a removable magnetic disk 29 and a removable optical disk 31, it should be appreciated by those skilled in the art that other types of computer readable media that can store data accessible by a computer, such as magnetic cassettes, flash memory cards, digital video disks, Bernoulli cartridges, random access memories (RAMs), read-only memories (ROMs) and the like may also be used in the exemplary operating environment.

A number of program modules may be stored on the hard disk, magnetic disk 29, optical disk 31, ROM 24 or RAM 25, including an operating system 35 (e.g., Windows" 2000). The computer 20 includes a file system 36 associated with or included within the operating system 35, such as the Windows File System (NTFS), one or more application programs 37, other program modules 38 and program data 39.

A user may enter commands and information into the computer 20 through input devices such as a keyboard 40 and pointing device 42. Other input devices (not shown) may include a microphone, joystick, game pad, satellite dish, scanner or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor 47, computers typically include other peripheral output devices, such as speakers and printers.

The computer 20 may operate in a networked environment using logical connections to one or more remote computers 49. The remote computer (or computers) 49 may be represented by a computer, a server, a router, a network PC, a peer device or other common network node, and it normally includes many or all of the elements described above relative to the computer 20, although only a memory storage device 50 is illustrated. The logical connections include a local area network (LAN) 51 and a wide area network (WAN) 52. Such networking environments are commonplace in offices, enterprise-wide computer networks, Intranets and the Internet.

When used in a LAN networking environment, the computer 20 is connected to the local network 51 through a network interface or adapter 53. When used in a WAN networking environment, the computer 20 typically includes a modem 54 or other means for establishing communications over the wide area network 52, such as the Internet. The modem 54, which may be internal or external, is connected to the system bus 23 via the serial port interface 46.

In a networked environment, program modules depicted relative to the computer 20, or portions thereof, may be stored in the remote memory storage device. It will be appreciated that the network connections shown are exemplary and other means of establishing a communications link between computers may be used. Such computers as described above can be used in conventional networks, e.g. the Internet, local area networks, regional networks, wide area networks, and so forth. These networks can link various resources, such as user computers, servers, Internet service providers, telephones connected to the network and so on.

Having thus described various embodiments, the inventor makes it apparent to those skilled in the art that certain advantages of the described method and apparatus have been achieved. The embodiments above are intended to be illustrative and not limiting. Additional embodiments are within the claims. In addition, although aspects of the present invention have been described with reference to particular embodiments, those skilled in the art will recognize that changes can be made in form and detail without departing from the invention, as defined by the claims.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as understood by persons of ordinary skill in the art.

## Claims

1. A method for identifying text and SPAM in an image utilizing a computer system, the method comprising:
(a) identifying a plurality of closed boundaries in the image, the closed boundaries corresponding to probable symbols, each closed boundary being formed around each probable symbol;
for each closed boundary, identifying adjacent closed boundaries that are within a distance of the closed boundary, to the left and right, as belonging to the same text line, wherein the distance is based on a predefined criterion that takes into account adjacent closed boundary pairs in a plurality of text lines; and
ignoring closed boundaries having a size outside a first size range;
(b) identifying probable text lines in the image, based on the adjacent closed boundaries, wherein adjacent closed boundaries belong to the same probable text line;
(c) parsing the probable text lines into probable words;
(d) detecting the presence of text in the image based on the probable words and verifying that the image contains text by comparing a number of pixels of a symbol color within remaining closed boundaries to a total number of pixels of the symbol color in the image, wherein the symbol color is different than a background color; and
(e) after verifying that the image contains text, computing a signature representing an arrangement of the closed boundaries within the probable words within the probable text lines identified in the image and comparing the signature against a SPAM template.

2. A method according to claim 1, further comprising, prior to step (d):
ignoring probable words having a length outside a second size range from the identified text lines; and
ignoring probable text lines that are shorter than a probable text line size threshold.

3. A method according to claim 2, wherein if the image contains text, the method further comprises rendering a spam/no spam verdict based on the comparison of the signature against the SPAM template.

4. The method of any preceding claim, further comprising converting the image from a vector form into a raster form, prior to step (a).

5. The method of any preceding claim, further comprising converting the image from a multi-color form to a two-color form, prior to step (a).

6. The method of claim 5, further comprising identifying one color of the two colors as the background color, and the other color as the symbol color.

7. The method of claim 6, further comprising generating a spectral distribution of the two-color image, and setting a threshold between the two colors at a level X2+¾ (XI-X2), X1 being a center of mass of the spectral distribution, and X2 being a first used color in the spectral distribution.

8. The method of claim 6, wherein identification of each closed boundary comprises identifying a first pixel of the symbol color, defining the closed boundary as the first pixel, and then repeatedly expanding the closed boundary in those directions where adjacent pixels are also of the symbol color.

9. The method of any preceding claim, further comprising, for each closed boundary, identifying other closed boundaries that are within 2Xim of the closed boundary as belonging to a suspected word, wherein Xim is a most frequent distance between all the adjacent closed boundary pairs in all text lines.

10. A system for identifying spam in an image, the system comprising: a processor; a storage arrangement coupled to the processor; computer code stored in the storage arrangement and accessible to the processor, the computer code for implementing the steps of any preceding claim.

11. A computer useable recording medium having computer executable program logic stored thereon for executing on a processor, the program logic comprising computer program code for implementing the steps of any of claims 1 to 9.

## Patentansprüche

1. Verfahren zum Identifizieren von Text und SPAM in einem Bild unter Verwendung eines Computersystems, wobei das Verfahren umfasst:
(a) Identifizieren mehrerer geschlossener Grenzen im Bild, wobei die geschlossenen Grenzen wahrscheinlichen Symbolen entsprechen, wobei jede geschlossene Grenze um jedes wahrscheinliche Symbol herum gebildet wird;
für jede geschlossene Grenze, Identifizieren benachbarter geschlossener Grenzen, die sich innerhalb eines Abstands der geschlossenen Grenze befinden, nach links und rechts, als zur gleichen Textzeile gehörig, wobei der Abstand auf einem vordefinierten Kriterium basiert, das benachbarte geschlossene Grenzpaare in mehreren Textzeilen berücksichtigt; und
Ignorieren geschlossener Grenzen, die eine Größe außerhalb eines ersten Größenbereichs aufweisen;
(b) Identifizieren wahrscheinlicher Textzeilen in dem Bild, basierend auf den benachbarten geschlossenen Grenzen, wobei benachbarte geschlossene Grenzen zu derselben wahrscheinlichen Textzeile gehören;
(c) Parsen der wahrscheinlichen Textzeilen in wahrscheinliche Wörter;
(d) Erfassen des Vorhandenseins von Text in dem Bild basierend auf den wahrscheinlichen Wörtern und Verifizieren, dass das Bild Text enthält, durch Vergleichen einer Anzahl von Pixeln einer Symbolfarbe innerhalb der verbleibenden geschlossenen Grenzen mit einer Gesamtzahl von Pixeln der Symbolfarbe in dem Bild, wobei die Symbolfarbe von einer Hintergrundfarbe verschieden ist; und
(e) nach Überprüfen, ob das Bild Text enthält, Berechnen einer Signatur, die eine Anordnung der geschlossenen Grenzen innerhalb der wahrscheinlichen Wörter innerhalb der wahrscheinlichen Textzeilen darstellt, die im Bild identifiziert wurden, und Vergleichen der Signatur mit einer SPAM-Vorlage.

2. Verfahren nach Anspruch 1, ferner umfassend vor Schritt (d):
Ignorieren wahrscheinlicher Wörter mit einer Länge außerhalb eines zweiten Größenbereichs von den identifizierten Textzeilen; und
Ignorieren wahrscheinlicher Textzeilen, die kürzer als ein Schwellenwert für die Größe einer Textzeile sind.

3. Verfahren nach Anspruch 2, wobei, wenn das Bild Text enthält, das Verfahren ferner das Rendern eines Spam/kein Spam-Urteils basierend auf dem Vergleich der Signatur mit der SPAM-Vorlage umfasst.

4. Verfahren nach einem der vorhergehenden Ansprüche, ferner umfassend das Umwandeln des Bildes von einer Vektorform in eine Rasterform vor Schritt (a).

5. Verfahren nach einem der vorhergehenden Ansprüche, ferner umfassend das Umwandeln des Bildes von einer Mehrfarbenform in eine Zweifarbenform vor Schritt (a).

6. Verfahren nach Anspruch 5, ferner umfassend das Identifizieren einer Farbe der beiden Farben als Hintergrundfarbe und der anderen Farbe als Symbolfarbe.

7. Verfahren nach Anspruch 6, ferner umfassend das Erzeugen einer spektralen Verteilung des Zweifarbenbildes und das Einstellen eines Schwellenwerts zwischen den beiden Farben auf einem Niveau X2+¾ (X1-X2), wobei X1 ein Massenschwerpunkt der spektralen Verteilung ist und X2 eine zuerst verwendete Farbe in der spektralen Verteilung ist.

8. Verfahren nach Anspruch 6, wobei das Identifizieren jeder geschlossenen Grenze das Identifizieren eines ersten Pixels der Symbolfarbe, das Definieren der geschlossenen Grenze als das erste Pixel und dann das wiederholte Ausdehnen der geschlossenen Grenze in jene Richtungen umfasst, in denen benachbarte Pixel auch die Symbolfarbe haben.

9. Verfahren nach einem der vorhergehenden Ansprüche, ferner umfassend, für jede geschlossene Grenze, das Identifizieren anderer geschlossener Grenzen, die innerhalb von 2Xim der geschlossenen Grenze liegen, als zu einem verdächtigen Wort gehörend, wobei Xim ein häufigster Abstand zwischen allen benachbarten geschlossenen Grenzpaaren in allen Textzeilen ist.

10. System zum Identifizieren von Spam in einem Bild, wobei das System umfasst: einen Prozessor; eine mit dem Prozessor gekoppelte Speicheranordnung; einen in der Speicheranordnung gespeicherten und für den Prozessor zugänglichen Computercode, wobei der Computercode zum Ausführen der Schritte jedes vorherigen Anspruchs dient.

11. Computertaugliches Aufzeichnungsmedium mit darauf gespeicherter computerausführbarer Programmlogik zur Ausführung auf einem Prozessor, wobei die Programmlogik einen Computerprogrammcode zur Durchführung der Schritte nach einem der Ansprüche 1 bis 9 umfasst.

## Revendications

1. Procédé d'identification de texte et de SPAM dans une image au moyen d'un système informatique, le procédé comprenant :
(a) l'identification d'une pluralité de frontières fermées dans l'image, les frontières fermées correspondant à des symboles probables, chaque frontière fermée étant formée autour de chaque symbole probable ;
pour chaque frontière fermée, l'identification de frontières fermées adjacentes qui sont à moins d'une certaine distance de la frontière fermée, vers la gauche et la droite, comme appartenant à la même ligne de texte, la distance étant basée sur un critère prédéfini qui prend en compte des paires de frontières fermées adjacentes dans une pluralité de lignes de texte ; et
la non-prise en compte de frontières fermées ayant une taille à l'extérieur d'une première gamme de taille ;
(b) l'identification de lignes de texte probables dans l'image, sur la base des frontières fermées adjacentes, des frontières fermées adjacentes appartenant à la même ligne de texte probable ;
(c) la décomposition syntaxique des lignes de texte probables en mots probables ;
(d) la détection de la présence de texte dans l'image sur la base des mots probables et la vérification que l'image contient du texte par comparaison d'un nombre de pixels d'une couleur de symbole à l'intérieur de frontières fermées restantes à un nombre total de pixels de la couleur de symbole dans l'image, la couleur de symbole étant différente d'une couleur de fond ; et
(e) après la vérification que l'image contient du texte, le calcul d'une signature représentant un agencement des frontières fermées à l'intérieur des mots probables à l'intérieur des lignes de texte probables identifiées dans l'image et la comparaison de la signature à un modèle de SPAM.

2. Procédé selon la revendication 1, comprenant en outre, avant l'étape (d) :
la non-prise en compte de mots probables ayant une longueur à l'extérieur d'une deuxième gamme de taille parmi les lignes de texte identifiées ; et
la non-prise en compte de lignes de texte probables qui sont plus courtes qu'un seuil de taille de ligne de texte probable.

3. Procédé selon la revendication 2, dans lequel, si l'image contient du texte, le procédé comprend en outre la délivrance d'un verdict de présence/absence de spam sur la base de la comparaison de la signature au modèle de SPAM.

4. Procédé d'une quelconque revendication précédente, comprenant en outre la conversion de l'image d'une forme vectorielle à une forme matricielle, avant l'étape (a).

5. Procédé d'une quelconque revendication précédente, comprenant en outre la conversion de l'image d'une forme multicolore à une forme bicolore, avant l'étape (a).

6. Procédé de la revendication 5, comprenant en outre l'identification d'une couleur parmi les deux couleurs comme la couleur de fond, et de l'autre couleur comme la couleur de symbole.

7. Procédé de la revendication 6, comprenant en outre la génération d'une distribution spectrale de l'image bicolore, et le réglage d'un seuil entre les deux couleurs à un niveau X2+¾(X1-X2), X1 étant un centre de masse de la distribution spectrale, et X2 étant une première couleur utilisée dans la distribution spectrale.

8. Procédé de la revendication 6, dans lequel l'identification de chaque frontière fermée comprend l'identification d'un premier pixel de la couleur de symbole, la définition de la frontière fermée comme le premier pixel, puis l'expansion répétée de la frontière fermée dans les directions où des pixels adjacents sont aussi de la couleur de symbole.

9. Procédé d'une quelconque revendication précédente, comprenant en outre, pour chaque frontière fermée, l'identification d'autres frontières fermées qui sont à moins de 2Xim de la frontière fermée comme appartenant à un mot suspecté, Xim étant une distance la plus fréquente entre toutes les paires de frontières fermées adjacentes dans toutes les lignes de texte.

10. Système d'identification de spam dans une image, le système comprenant : un processeur ; un agencement de stockage couplé au processeur ; un code informatique stocké dans l'agencement de stockage et accessible au processeur, le code informatique étant destiné à en oeuvre les étapes d'une quelconque revendication précédente.

11. Support d'enregistrement utilisable par ordinateur ayant une logique de programme exécutable par ordinateur stockée sur celui-ci pour exécution sur un processeur, la logique de programme comprenant un code de programme informatique destiné à mettre en oeuvre les étapes de l'une quelconque des revendications 1 à 9.
